# EUROPEAN PATENT APPLICATION

(11) **EP 4 518 565 A1**
(43) Date of publication of application: **05.03.2025**
(21) Application number: 23796296.4
(22) Date of filing: 24.04.2023
(51) Int. Cl.: H04W 76/20, H04W 12/082, H04W 76/38, H04W 84/06

(54) **USER EQUIPMENT (UE)**

(30) Priority: 27.04.2022 JP 2022072932
(71) Applicant: Sharp Kabushiki Kaisha, Sakai City, Osaka 590-8522 (JP)
(72) Inventor: IZUMI, Masaki, Sakai City Osaka 590-8522 (JP); KUGE, Yoko, Sakai City Osaka 590-8522 (JP); SUGAWARA, Yasuo, Sakai City Osaka 590-8522 (JP); CHIBA, Shuichiro, Sakai City Osaka 590-8522 (JP)
(74) Representative: Müller-Boré & Partner Patentanwälte PartG mbB
(86) International application number: PCT/JP2023/016033
(87) International publication number: WO 2023/210556

(57) **Abstract**

Every effort is being made to define communication between an Unmanned Aerial Vehicle (UAV) and a UAV controller using a 5G System (5GS). On the other hand, with respect to communication (direct C2 communication) between the UAV and the UAV controller, a method for releasing a communication path after established, and a behavior in a case that authentication and/or authorization are revoked are not clear. A User Equipment (UE) has established a communication path for a direct C2 communication, and can initiate a release procedure of the communication path for the direct C2 communication in a case of receiving a PDU session modification command message including information indicating that authentication and/or authorization of the communication path for the direct C2 communication is revoked from a network.

## Description

### Technical Field

The present invention relates to a User Equipment (UE).

### Background Art

In the 3rd Generation Partnership Project (3GPP), system architecture of a 5G System (5GS), which is a fifth generation (5G) mobile communication system, has been studied, and discussions are underway to support new procedures and new functions (see NPLs 1 to 3). In Release 17 of the 5G standard, a mobile communication system for drones is discussed (see NPL 4).

### Citation List

### Non Patent Literature

NPL 1: 3GPP TS 23.501 V17.4.0 (2022-03); 3rd Generation Partnership Project; Technical Specification Group Services and System Aspects; System architecture for the 5G System (5GS); Stage 2 (Release 17)
NPL 2: 3GPP TS 23.502 V17.4.0 (2022-03); 3rd Generation Partnership Project; Technical Specification Group Services and System Aspects; Procedures for the 5G System (5GS); Stage 2 (Release 17)
NPL 3: 3GPP TS 24.501 V17.6.1 (2022-03); 3rd Generation Partnership Project; Technical Specification Group Core Network and Terminals; Non-Access-Stratum (NAS) protocol for 5G System (5GS); Stage 3 (Release 17)
NPL 4: 3GPP TS 23.256 V17.2.0 (2022-03); 3rd Generation Partnership Project; Technical Specification Group Services and System Aspects; Support of Uncrewed Aerial Systems (UAS) connectivity, identification and tracking; Stage 2 (Release 17)

### Summary of Invention

### Technical Problem

For the 5G System (5GS), a 5G Core Network (5GCN) which is a new core network has been studied for the purpose of providing various services. Further, as a communication device for operating an Unmanned Aerial Vehicle (UAV), a communication device using a 5GS has also been studied.

At present, in the communication device of the UAV using the MGS, the UAV is about to be specified not only for communication using the 5GS but also for direct communication with the UAV controller (referred to as direct C2 communication).

On the other hand, with respect to the direct C2 communication, a method for establishment and method for authentication and/or authorization of a communication path are not clear. Further, a behavior for a case that authentication and/or authorization for the direct C2 communication is revoked is not clear. In addition, a procedure for releasing the communication path for the direct C2 communication and in what case the communication path is released are not clear.

An aspect of the present invention has been made in view of the above-described circumstances, and an object thereof is to indicate and clarify a behavior of a UAV in a case that the UAV receives a revocation of authentication and/or authorization for direct C2 communication from a network. The procedure for releasing the direct C2 communication and the timing for initiating the procedure are also clarified.

### Solution to Problem

An aspect of the present invention provides a User Equipment (UE) including a transmission and/or reception unit and a controller, wherein the UE has established a communication path with a UAV-C for a first direct C2 communication, the transmission and/or reception unit receives a PDU session modification command message including first identification information from a network, the first identification information is information indicating that authentication and/or authorization of the communication path for the first direct C2 communication is revoked, and the controller, based on reception of the PDU session modification command message, recognizes that the authentication and/or authorization of the communication path for the first direct C2 communication has been revoked, and initiates a release procedure of the communication path for the first direct C2 communication.

### Advantageous Effects of Invention

According to an aspect of the present invention, it is possible to clarify the behavior of the UAV in a case that the authentication and/or authorization for the direct C2 communication is revoked, the procedure for releasing the direct C2 communication, and the timing for initiating the procedure.

### Brief Description of Drawings

FIG. 1 is a diagram illustrating an overview of a mobile communication system (EPS/5GS).
FIG. 2 is a diagram illustrating a detailed configuration of the mobile communication system (EPS/5GS).
FIG. 3 is a diagram illustrating an apparatus configuration of a UE.
FIG. 4 is a diagram illustrating a configuration of an access network apparatus (gNB) in the 5GS.
FIG. 5 is a diagram illustrating a configuration of a core network apparatus (AMF/SMF/UPF) in the 5GS.
FIG. 6 is a diagram illustrating a registration procedure.
FIG. 7 is a diagram illustrating a PDU session establishment procedure.
FIG. 8 is a diagram illustrating a network-initiated session management procedure.
FIG. 9 is a diagram illustrating a UE-initiated session management procedure.
FIG. 10 is a diagram illustrating a procedure for establishing direct C2 communication.
FIG. 11 is a diagram illustrating a procedure for releasing direct C2 communication.
FIG. 12 is a diagram illustrating a UUAA-MM procedure.
FIG. 13 is a diagram illustrating a UUAA-SM procedure.
FIG. 14 is a diagram illustrating a UUAA revocation procedure.

### Description of Embodiments

A preferred embodiment for carrying out an aspect of the present invention will be described below with reference to the drawings. Note that an embodiment of a mobile communication system to which an aspect of the present invention is applied will be described as an example in the present embodiment.

### 1. Overview of System

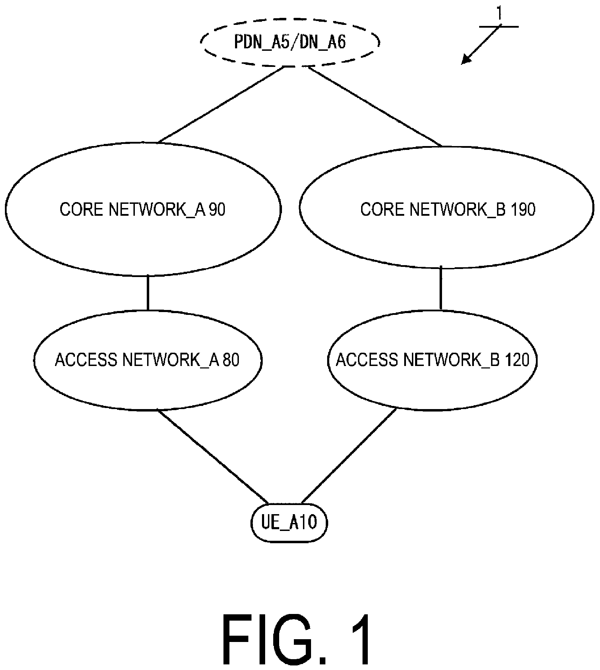

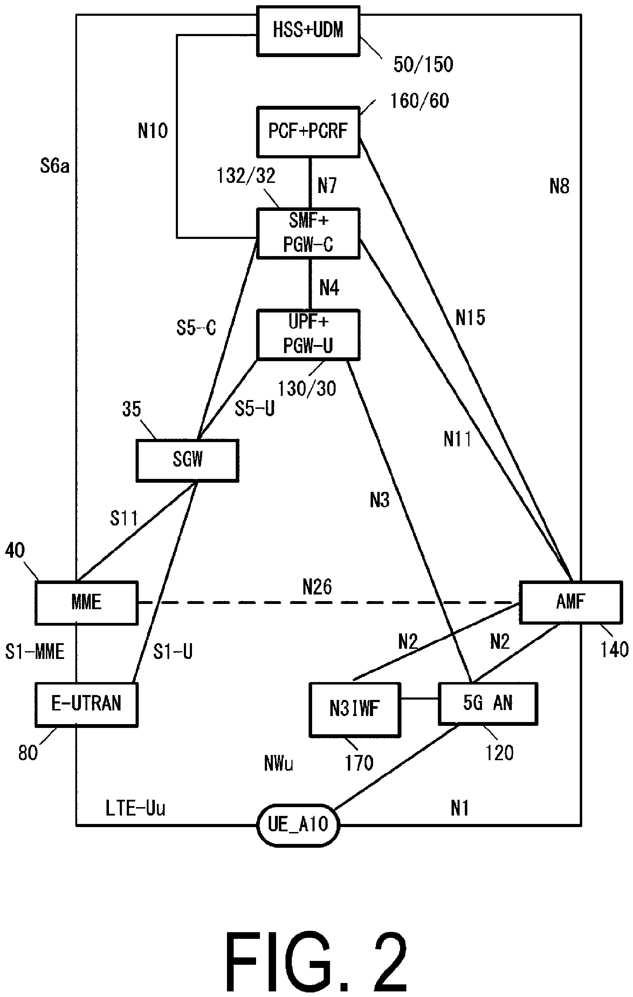

First, FIG. 1 is a diagram illustrating an overview of a mobile communication system 1 used in each embodiment, and FIG. 2 is a diagram illustrating a detailed configuration of the mobile communication system 1.

FIG. 1 illustrates the mobile communication system 1 including UE_A 10, an access network_A 80, a core network_A 90, a Packet Data Network (PDN)_A 5, an access network_B 120, a core network_B 190, and a Data Network (DN)_A 6.

In the following description, the reference numerals of these apparatuses and functions may be omitted, as in UE, an access network_A, a core network _A, a PDN, an access network_B, a core network_B, a DN, and the like.

In addition, FIG. 2 illustrates apparatuses and functions such as the UE_A 10, an E-UTRAN 80, an MME 40, an SGW 35, a PGW-U 30, a PGW-C 32, a PCRF 60, an HSS 50, a 5G AN 120, an AMF 140, a UPF 130, an SMF 132, a PCF 160, a UDM 150, and an N3IWF 170, and interfaces for connecting these apparatuses and functions to each other.

In the following description, the reference numerals of these apparatuses and functions may be omitted as in UE, an E-UTRAN, an MME, an SGW, a PGW-U, a PGW-C, a PCRF, an HSS, a 5G AN, an AMF, a UPF, an SMF, a PCF, a UDM, an N3IWF, and the like.

Note that an Evolved Packet System (EPS) that is a 4G system includes an access network_A and a core network_A and may further include UE and/or a PDN. In addition, a 5G System (5GS) that is a 5G system includes UE, an access network_B, and a core network_B and may further include a DN.

The UE is an apparatus that can be connected to a network service over 3GPP access (also referred to as a 3GPP access network or a 3GPP AN) and/or non-3GPP access (also referred to as a non-3GPP access network or a non-3GPP AN). The UE may be a terminal apparatus capable of performing radio communication, such as a mobile phone or a smartphone, and may be a terminal apparatus that can be connected to both the EPS and the 5GS. The UE may include a Universal Integrated Circuit Card (UICC) and an Embedded UICC (eUICC). Note that the UE may be referred to as user equipment or a terminal apparatus.

In addition, the access network_A corresponds to an Evolved Universal Terrestrial Radio Access Network (E-UTRAN) and/or a wireless LAN access network. In the E-UTRAN, one or multiple evolved Node-B (eNBs) 45 are deployed. Note that, in the following description, the reference numeral of the eNB 45 may be omitted as in eNB. In addition, in a case that there are multiple eNBs, the eNBs are connected to each other via, for example, an X2 interface. In addition, one or multiple access points are deployed on the wireless LAN access network.

In addition, the access network_B corresponds to a 5G access network (5G AN). The 5G AN includes an NG Radio Access Network (NG-RAN) and/or a non-3GPP access network. One or multiple NR Node-Bs (gNBs) 122 are deployed on the NG-RAN. Note that in the following description, the symbol for the gNB 122 may be omitted as a gNB. The gNB is a node that provides a New Radio (NR) user plane and control plane to the UE, and is connected to a 5GCN via an NG interface (including an N2 interface or an N3 interface). In other words, the gNB is a base station apparatus newly designed for the 5GS and has functions different from those of the base station apparatus (eNB) used in the EPS that is a 4G system. In addition, in a case that there are multiple gNBs, the gNBs are connected to each other via, for example, an Xn interface.

In addition, a non-3GPP access network may be an untrusted non-3GPP access network or a trusted non-3GPP access network. Here, the untrusted non-3GPP access network may be a non-3GPP access network that does not manage security on the access network, for example, a public wireless LAN. On the other hand, the trusted non-3GPP access network may be an access network defined by the 3GPP and may include a trusted non-3GPP access point (TNAP) and a trusted non-3GPP Gateway function (TNGF).

In addition, in the following description, the E-UTRAN and the NG-RAN may be referred to as 3GPP access. In addition, the wireless LAN access network and the non-3GPP AN may be referred to as non-3GPP access. In addition, nodes deployed on the access network_B may also be collectively referred to as NG-RAN nodes.

In addition, in the following description, the access network _A, and/or the access network_B, and/or an apparatus included in the access network _A, and/or an apparatus included in the access network_B may be referred to as an access network or an access network apparatus.

The core network _A corresponds to an Evolved Packet Core (EPC). In the EPC, for example, a Mobility Management Entity (MME), a Serving Gateway (SGW), a Packet Data Network Gateway (PGW)-U, a PGW-C, a Policy and Charging Rules Function (PCRF), a Home Subscriber Server (HSS), and the like are deployed.

In addition, the core network_B corresponds to a 5G Core Network (5GCN). An Access and Mobility Management Function (AMF), a User Plane Function (UPF), a Session Management Function (SMF), a Policy Control Function (PCF), a Unified Data Management (UDM), and the like are deployed on the 5GCN. Here, the 5GCN may be referred to as a 5GC.

In addition, in the following description, the core network _A, and/or the core network_B, an apparatus included in the core network _A, and/or an apparatus included in the core network_B may be referred to as a core network, a core network apparatus, or an intra-core network apparatus.

The core network (the core network_A and/or the core network_B) may refer to an IP mobile communication network operated by a mobile communication operator (Mobile Network Operator (MNO)) connecting the access network (the access network _A and/or the access network_B) and the PDN and/or the DN, a core network for a mobile communication operator that operates and manages the mobile communication system 1, or a core network for a virtual mobile communication operator and a virtual mobile communication service provider such as a Mobile Virtual Network Operator (MVNO) and a Mobile Virtual Network Enabler (MVNE).

In addition, although FIG. 1 illustrates a case that the PDN and the DN are the same, the PDN and the DN may be different. The PDN may be a Data Network (DN) that provides communication services to the UE. Note that the DN may be configured as a packet data service network or may be configured for each service. In addition, the PDN may include a connected communication terminal. Thus, "to be connected to the PDN" may mean "to be connected to a communication terminal and a server apparatus deployed in the PDN". In addition, "to transmit and/or receive user data to and/or from the PDN" may mean "to transmit and/or receive user data to and/or from a communication terminal and a server apparatus deployed in the PDN". Note that the PDN may be referred to as a DN, and the DN may be referred to as a PDN.

In addition, in the following, at least some of the access network _A, the core network_A, the PDN, the access network_B, the core network_B, and the DN, and/or one or multiple apparatuses included in these may be referred to as a network or a network apparatus. In other words, the expression that "the network and/or the network apparatus transmits and/or receives a message and/or performs a procedure" means that "at least some of the access network _A, the core network _A, the PDN, the access network_B, the core network_B, and the DN, and/or one or multiple apparatuses included in these transmit and/or receive a message and/or perform a procedure".

In addition, the UE can be connected to the access network. In addition, the UE can be connected to the core network over the access network. Furthermore, the UE can be connected to the PDN or the DN over the access network and the core network. In other words, the UE can transmit and/or receive (communicate) user data to and/or from the PDN or the DN. In a case that user data is transmitted and/or received, not only Internet Protocol (IP) communication but also non-IP communication may be used.

Here, IP communication refers to data communication using an IP, and data is transmitted and/or received using IP packets. Each IP packet includes an IP header and a payload part. In the payload part, data transmitted and/or received by the apparatuses and functions included in the EPS and the apparatuses and functions included in the 5GS may be included. In addition, non-IP communication refers to data communication performed using no IP, in which data is transmitted and/or received in a form different from the structure of an IP packet. For example, non-IP communication may be data communication implemented through transmission and/or reception of application data to which an IP header is not added, or user data transmitted and/or received by the UE may be transmitted and/or received with another header such as a MAC header and an Ethernet (trade name) frame header added.

In addition, apparatuses which are not illustrated in FIG. 2 may be included in the access network _A, the core network A, the access network_B, the core network_B, the PDN_A, and the DN_A. For example, the core network_A and/or the core network_B may include an Authentication Server Function (AUSF) and an Authentication, authorization, and accounting (AAA) server (AAA-S).

Here, the AUSF is a core network apparatus provided with an authentication function for 3GPP access and non-3GPP access. Specifically, the AUSF is a network function unit that receives an authentication request for 3GPP access and/or non-3GPP access from the UE and performs an authentication procedure.

The AAA server is an apparatus that is connected directly to the AUSF or indirectly to the AUSF via another network apparatus and has authentication, authorization, and billing functions. The AAA server may be a network apparatus within the core network. Note that the AAA server may not be included in the core network_A and/or the core network_B and may be included in the PLMN. In other words, the AAA server may be a core network apparatus or may be an apparatus outside the core network. For example, the AAA server may be a server apparatus within the PLMN managed by a 3rd party.

Note that, although each of the apparatuses and functions is illustrated one by one for simplicity in FIG. 2, multiple similar apparatuses and functions may be included in the mobile communication system 1. Specifically, multiple apparatuses and functions such as multiple pieces of UE_A 10, E-UTRANs 80, MMEs 40, SGWs 35, PGW-Us 30, PGW-Cs 32, PCRFs 60, HSSs 50, 5G ANs 120, AMFs 140, UPFs 130, SMFs 132, PCFs 160, and/or UDMs 150 may be included in the mobile communication system 1.

A UPF_A 235 is connected to the DN, the SMF, other UPFs and the access network. The UPF_A 235 may play roles of an anchor to intra-RAT mobility or inter-RAT mobility, Packet routing & forwarding, an Uplink Classifier (UL CL) function to support routing of multiple traffic flows for one DN, a Branching point function to support a multi-homed PDU session, QoS processing for a user plane, verification of uplink traffic, buffering of downlink packets, a function of triggering Downlink Data Notification, and the like. Furthermore, the UPF_A 235 may be a relay apparatus that transfers the user data as a gateway between the DN and the core network_B 190. Note that the UPF_A 235 may serve as a gateway for IP communication and/or non-IP communication. Furthermore, the UPF_A 235 may have a function of transferring IP communication or a function to perform conversion between non-IP communication and IP communication. The multiple gateways deployed may serve as gateways for connecting the core network_B 190 with a single DN. Note that the UPF_A 235 may have connectivity with another NF or may be connected to each apparatus via another NF.

Note that, a UPF_C 239 (also referred to as a branching point or an uplink classifier), which is a UPF different from the UPF_A 235, may be present as an apparatus or NF between the UPF_A 235 and the access network. With the UPF_C 239 present, the PDU session between the UE and the DN is established via the access network, the UPF_C 239, and the UPF_A 235.

The UPF 130 may be an apparatus similar to the UPF_A 235. The UPF 130 and the UPF_A 235 may be described with the symbols thereof omitted, like the UPF.

### 2. Configuration of Each Apparatus

Next, a configuration of each apparatus (the UE, and/or the access network apparatus, and/or the core network apparatus) used in each embodiment will be described with reference to the drawings. Note that each apparatus may be configured as physical hardware, may be configured as logical (virtual) hardware configured in general-purpose hardware, or may be configured as software. In addition, at least a part (including all) of the functions of each apparatus may be configured as physical hardware, logical hardware, or software.

Note that each storage unit (a storage unit_A 340, a storage unit_A 440, a storage unit_B 540, a storage unit_A 640, and a storage unit_B 740) in each apparatus and function to be described later includes, for example, a semiconductor memory, a Solid State Drive (SSD), a Hard Disk Drive (HDD), or the like. In addition, each storage unit can store not only information originally configured at the time of being shipped, but also various pieces of information transmitted and/or received to and/or from apparatuses and functions (for example, the UE, and/or the access network apparatus, and/or the core network apparatus, and/or the PDN, and/or the DN) other than the apparatus and functions of each storage unit. In addition, each storage unit can store identification information, control information, flags, parameters, and the like included in a control message transmitted and/or received in various communication procedures to be described later. In addition, each storage unit may store these pieces of information for each UE. In addition, in a case that each storage unit performs interworking between the 5GS and the EPS, each storage unit can store a control message and user data transmitted and/or received to and/or from the apparatuses and functions included in the 5GS and/or the EPS. In this case, not only data transmitted and/or received over the N26 interface but also data transmitted and/or received without using the N26 interface can be stored.

### 2.1. Apparatus Configuration of UE

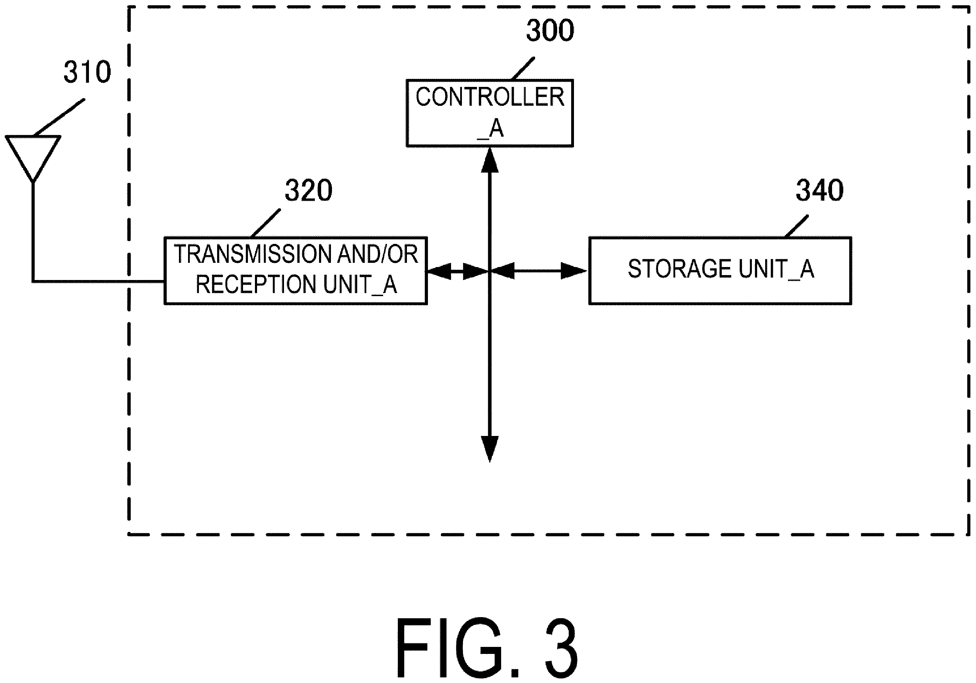

First, an apparatus configuration example of the User Equipment (UE) will be described with reference to FIG. 3. The UE includes a controller _A 300, an antenna 310, a transmission and/or reception unit_A 320, and a storage unit_A 340. The controller _A 300, the transmission and/or reception unit_A 320, and the storage unit_A 340 are connected via a bus. The transmission and/or reception unit_A 320 is connected to the antenna 310.

The controller _A 300 is a function unit that controls overall operations and functions of the UE. The controller_A 300 reads and performs various programs stored in the storage unit_A 340 as necessary, and thereby implements various types of processing in the UE.

The transmission and/or reception unit_A 320 is a function unit that performs radio communication with a base station apparatus (the eNB or the gNB) within the access network via the antenna. In other words, with the use of the transmission and/or reception unit_A 320, the UE can transmit and/or receive user data and/or control information to and/or from the access network apparatus, and/or the core network apparatus, and/or the PDN, and/or the DN.

To provide detailed description with reference to FIG. 2, by using the transmission and/or reception unit_A 320, the UE can communicate with the base station apparatus (eNB) within the E-UTRAN over an LTE-Uu interface. In addition, the UE can communicate with the base station apparatus (gNB) within the 5G AN with the use of the transmission and/or reception unit_A 320. In addition, the UE can transmit and/or receive a Non-Access-Stratum (NAS) message to and/or from the AMF over an N1 interface with the use of the transmission and/or reception unit_A 320. However, the N1 interface is a logical interface, and thus communication between the UE and the AMF is actually performed over the 5G AN.

The storage unit_A 340 is a function unit that stores programs, user data, control information, and the like necessary for each operation of the UE.

### 2.2. Apparatus Configuration of gNB

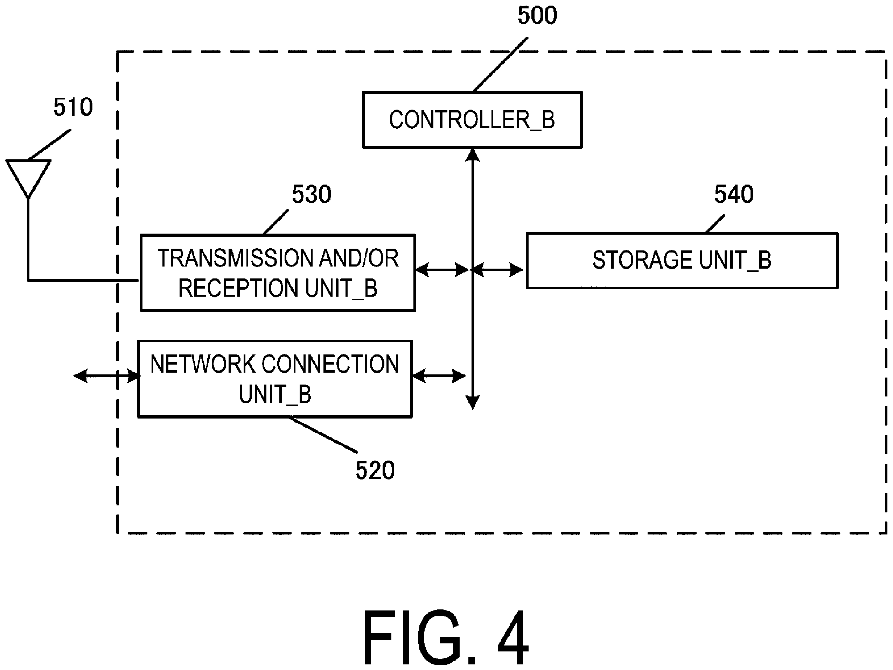

Next, an apparatus configuration example of the gNB will be described with reference to FIG. 4. The gNB includes a controller_B 500, an antenna 510, a network connection unit_B 520, a transmission and/or reception unit_B 530, and a storage unit_B 540. The controller_B 500, the network connection unit_B 520, the transmission and/or reception unit_B 530, and the storage unit_B 540 are connected via a bus. The transmission and/or reception unit_B 530 is connected to the antenna 510.

The controller_B 500 is a function unit that controls overall operations and functions of the gNB. The controller_B 500 reads and performs various programs stored in the storage unit_B 540 as necessary, and thereby implements various types of processing in the gNB.

The network connection unit_B 520 is a function unit for the gNB to communicate with the AMF and/or the UPF. In other words, with the use of the network connection unit_B 520, the gNB can transmit and/or receive user data and/or control information to and/or from the AMF and/or the UPF.

The transmission and/or reception unit_B 530 is a function unit that performs radio communication with the UE via the antenna 510. In other words, with the use of the transmission and/or reception unit_B 530, the gNB can transmit and/or receive user data and/or control information to and/or from the UE.

To provide detailed description with reference to FIG. 2, by using the network connection unit_B 520, the gNB within the 5G AN can communicate with the AMF over the N2 interface and can communicate with the UPF over the N3 interface. In addition, the gNB can communicate with the UE with the use of the transmission and/or reception unit_B 530.

The storage unit_B 540 is a function unit that stores programs, user data, control information, and the like necessary for each operation of the gNB.

### 2.3. Apparatus Configuration of AMF

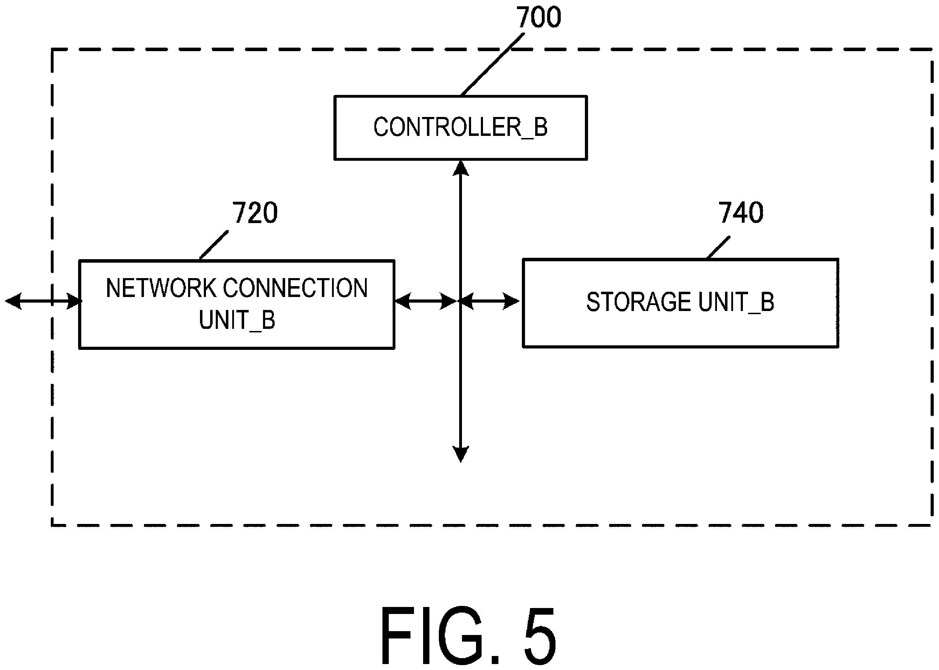

Next, an apparatus configuration example of the AMF will be described with reference to FIG. 5. The AMF includes a controller_B 700, a network connection unit_B 720, and a storage unit_B 740. The controller_B 700, the network connection unit_B 720, and the storage unit_B 740 are connected via a bus. The AMF may be a node that handles a control plane.

The controller_B 700 is a function unit that controls overall operations and functions of the AMF. The controller_B 700 reads and performs various programs stored in the storage unit_B 740 as necessary, and thereby implements various types of processing in the AMF.

The network connection unit_B 720 is a function unit for the AMF to connect to the base station apparatus (gNB) within the 5G AN, and/or the SMF, and/or the PCF, and/or the UDM, and/or an SCEF. In other words, with the use of the network connection unit_B 720, the AMF can transmit and/or receive user data and/or control information to and/or from the base station apparatus (gNB) in the 5G AN, and/or the SMF, and/or the PCF, and/or the UDM, and/or the SCEF.

To provide detailed description with reference to FIG. 2, by using a network connection unit_A 620, the AMF within the 5GCN can communicate with the gNB over the N2 interface, can communicate with the UDM over an N8 interface, can communicate with the SMF over an N11 interface, and can communicate with the PCF over an N15 interface. In addition, the AMF can transmit and/or receive a NAS message to and/or from the UE over the N1 interface with the use of the network connection unit_A 620. However, the N1 interface is a logical interface, and thus communication between the UE and the AMF is actually performed over the 5G AN. In addition, in a case that the AMF supports an N26 interface, the AMF can communicate with the MME over the N26 interface with the use of the network connection unit_A 620.

The storage unit_B 740 is a function unit that stores programs, user data, control information, and the like necessary for each operation of the AMF.

Note that the AMF has a function of exchanging a control message with the RAN using the N2 interface, a function of exchanging a NAS message with the UE using the N1 interface, a function of performing encryption and integrity protection of a NAS message, a Registration management (RM) function, a Connection management (CM) function, a Reachability management function, a Mobility management function for the UE or the like, a function of transferring a Session Management (SM) message between the UE and the SMF, an Access Authentication (Access Authorization) function, a security anchor function (Security Anchor Functionality (SEA)), a Security Context Management (SCM) function, a function of supporting the N2 interface for a Non-3GPP Interworking Function (N3IWF), a function of supporting transmission and/or reception of a NAS signal to an/or from the UE via the N3IWF, a function of authenticating the UE connected via the N3IWF, and the like.

In addition, in registration management, an RM state for each UE is managed. The RM state may be synchronized between the UE and the AMF. The RM state includes a deregistered state (RM-DEREGISTERED state) and a registered state (RM-REGISTERED state). In the RM-DEREGISTERED state, because the UE is not registered with the network, the AMF is in a state of being unable to reach the UE, because a UE context in the AMF does not have location information and routing information that are valid for the UE. In addition, in the RM-REGISTERED state, because the UE is registered in the network, the UE can receive a service that requires registration with the network. Note that the RM state may be referred to as a 5GMM state. In this case, the RM-DEREGISTERED state may be referred to as a 5GMM-DEREGISTERED state, and the RM-REGISTERED state may be referred to as a 5GMM-REGISTERED state.

In other words, 5GMM-REGISTERED may be a state in which each apparatus establishes a 5GMM context, or may be a state in which each apparatus establishes a PDU session context. Note that, in a case that each apparatus is in 5GMM-REGISTERED, the UE_A 10 may start transmission and/or reception of user data and a control message, or may respond to paging. Furthermore, note that, in a case that each apparatus is in 5GMM-REGISTERED, the UE_A 10 may perform a registration procedure other than a registration procedure for initial registration, and/or a service request procedure.

In addition, 5GMM-DEREGISTERED may be a state in which each apparatus does not establish the 5GMM context, may be a state in which the location information of the UE_A 10 is not known to the network, or may be a state in which the network is unable to reach the UE_A 10. Note that, in a case that each apparatus is in 5GMM-DEREGISTERED, the UE_A 10 may initiate the registration procedure, or may perform the registration procedure to thereby establish the 5GMM context.

In addition, in connection management, a CM state for each UE is managed. The CM state may be synchronized between the UE and the AMF. The CM state includes a non-connected state (CM-IDLE state) and a connected state (CM-CONNECTED state). In the CM-IDLE state, the UE is in the RM-REGISTERED state, but does not have NAS signaling connection established with the AMF via the N1 interface. In addition, in the CM-IDLE state, the UE has neither connection of the N2 interface (N2 connection) nor connection of the N3 interface (N3 connection). On the other hand, in the CM-CONNECTED state, the UE has NAS signaling connection established with the AMF via the N1 interface. In addition, in the CM-CONNECTED state, the UE may have connection of the N2 interface (N2 connection) and/or connection of the N3 interface (N3 connection).

Furthermore, in connection management, management may be performed separately for the CM state in 3GPP access and the CM state in non-3GPP access. In this case, the CM state in 3GPP access may include a non-connected state in 3GPP access (CM-IDLE state over 3GPP access) and a connected state in 3GPP access (CM-CONNECTED state over 3GPP access). Furthermore, the CM state in non-3GPP access may include a non-connected state in non-3GPP access (CM-IDLE state over non-3GPP access) and a connected state in non-3GPP access (CM-CONNECTED state over non-3GPP access). Note that the non-connected state may be referred to as an idle mode, and a connected state mode may be referred to as a connected mode.

Note that the CM state may be referred to as a 5GMM mode. In this case, the non-connected state may be referred to as a 5GMM non-connected mode (5GMM-IDLE mode), and the connected state may be referred to as a 5GMM connected mode (5GMM-CONNECTED mode). In addition, the non-connected state in 3GPP access may be referred to as a 5GMM non-connected mode in 3GPP access (5GMM-IDLE mode over 3GPP access), and the connected state in 3GPP access may be referred to as a 5GMM connected mode in 3GPP access (5GMM-CONNECTED mode over 3GPP access). In addition, the non-connected state in non-3GPP access may be referred to as a 5GMM non-connected mode in non-3GPP access (5GMM-IDLE mode over non-3GPP access), and the connected state in non-3GPP access may be referred to as a 5GMM connected mode in non-3GPP access (5GMM-CONNECTED mode over non-3GPP access). Note that the 5GMM non-connected mode may be referred to as an idle mode, and the 5GMM connected mode may be referred to as a connected mode.

In addition, one or multiple AMFs may be deployed within the core network_B. The AMF may be a Network Function (NF) that manages one or more Network Slice Instances (NSIs). In addition, the AMF may be a common CP function (Common Control Plane Network Function (CPNF)(CCNF)) shared among multiple NSIs.

Note that, in a case that the UE connects to the 5GS over non-3GPP access, the N3IWF is an apparatus and/or a function deployed between non-3GPP access and the 5GCN.

### 2.4. Apparatus Configuration of SMF

Next, an apparatus configuration example of the SMF will be described with reference to FIG. 5. The SMF includes a controller_B 700, a network connection unit_B 720, and a storage unit_B 740. The controller_B 700, the network connection unit_B 720, and the storage unit_B 740 are connected via a bus. The SMF may be a node that handles the control plane.

The controller_B 700 is a function unit that controls overall operations and functions of the SMF. The controller_B 700 reads and performs various programs stored in the storage unit_B 740 as necessary, and thereby implements various types of processing in the SMF.

The network connection unit_B 720 is a function unit for the SMF to connect to the AMF, and/or the UPF, and/or the PCF, and/or the UDM. In other words, with the use of the network connection unit_B 720, the SMF can transmit and/or receive user data and/or control information to and/or from the AMF, and/or the UPF, and/or the PCF, and/or the UDM.

To provide detailed description with reference to FIG. 2, by using of the network connection unit_A 620, the SMF in the 5GCN can communicate with the AMF over the N11 interface, can communicate with the UPF over the N4 interface, can communicate with the PCF over an N7 interface, and can communicate with the UDM over an N10 interface.

The storage unit_B 740 is a function unit that stores programs, user data, control information, and the like necessary for each operation of the SMF.

The SMF has a Session Management function for managing establishment, modification, and release of a PDU session, a function of IP address allocation to the UE and management thereof, a function of selection and control of the UPF, a function of configuring the UPF for routing traffic to an appropriate destination (transmission destination), a function of transmitting and/or receiving an SM part of a NAS message, a function of signaling arrival of downlink data (Downlink Data Notification), a function of providing SM information specific to an AN (for each AN) that is transmitted to the AN through the AMF over the N2 interface, a function of determining a Session and Service Continuity mode (SSC mode) for a session, a roaming function, and the like.

### 2.5. Apparatus Configuration of UPF

Next, an apparatus configuration example of the UPF will be described with reference to FIG. 5. The UPF includes a controller_B 700, a network connection unit_B 720, and a storage unit_B 740. The controller_B 700, the network connection unit_B 720, and the storage unit_B 740 are connected via a bus. The UPF may be a node that handles the control plane.

The controller_B 700 is a function unit that controls overall operations and functions of the UPF. The controller_B 700 reads and performs various programs stored in the storage unit_B 740 as necessary, and thereby implements various types of processing in the UPF.

The network connection unit_B 720 is a function unit for the UPF to connect to the base station apparatus (gNB) within the 5G AN, and/or the SMF, and/or the DN. In other words, with the use of the network connection unit_B 720, the UPF can transmit and/or receive user data and/or control information to and/or from the base station apparatus (gNB) within the 5G AN, and/or the SMF, and/or the DN.

To provide detailed description with reference to FIG. 2, by using the network connection unit_A 620, the UPF within the 5GCN can communicate with the gNB over the N3 interface, can communicate with the SMF over the N4 interface, can communicate with the DN over an N6 interface, and can communicate with another UPF over an N9 interface.

The storage unit_B 740 is a function unit that stores programs, user data, control information, and the like necessary for each operation of the UPF.

The UPF has a function as an anchor point for intra-RAT mobility or inter-RAT mobility, a function as an external PDU session point to be interconnected with the DN (that is, a function of transferring user data as a gateway between the DN and the core network _B), a function of routing and transferring packets, an Uplink Classifier (UL CL) function of supporting routing of multiple traffic flows for one DN, a Branching point function of supporting a multi-homed PDU session, a Quality of Service (QoS) processing function for the user plane, a function of verifying uplink traffic, a function of triggering buffering of downlink packets and Downlink Data Notification, and the like.

In addition, the UPF may be a gateway for IP communication and/or non-IP communication. In addition, the UPF may have a function of transferring IP communication, or a function of conversion between non-IP communication and IP communication. Furthermore, multiple deployed gateways may be gateways for connecting the core network_B and a single DN. Note that the UPF may have connectivity with another NF, and may be connected to each apparatus via another NF.

Note that a user plane refers to user data that is transmitted and/or received between the UE and a network. The user plane may be transmitted and/or received using a PDN connection or a PDU session. Furthermore, in a case of the EPS, the user plane may be transmitted and/or received using an LTE-Uu interface, and/or an S1-U interface, and/or an S5 interface, and/or an S8 interface, and/or an SGi interface. Furthermore, in a case of the 5GS, the user plane may be transmitted and/or received over the interface between the UE and the NG RAN, and/or the N3 interface, and/or the N9 interface, and/or the N6 interface. The user plane may be hereinafter referred to as a U-Plane.

In addition, a control plane refers to a control message that is transmitted and/or received in order to perform communication control of the UE or the like. The control plane may be transmitted and/or received using Non-Access-Stratum (NAS) signaling connection between the UE and the MME. In addition, in a case of the EPS, the control plane may be transmitted and/or received using the LTE-Uu interface and an S1-MME interface. Furthermore, in a case of the 5GS, the control plane may be transmitted and/or received using the interface between the UE and the NG RAN and the N2 interface. The control plane may be hereinafter referred to as a control plane, or may be hereinafter referred to as a C-Plane.

Furthermore, the U-Plane (User Plane (UP)) may be a communication path for transmitting and/or receiving user data, and may include multiple bearers. Furthermore, the C-Plane (Control Plane (CP)) may be a communication path for transmitting and/or receiving a control message, and may include multiple bearers.

### 2.6. Description of Other Apparatuses and/or Functions

Next, other apparatuses and/or functions will be described.

The PCF has a function such as a function of providing policy rules.

The UDM includes an Authentication credential processing function, a user identification processing function, an access authentication function, a registration/mobility management function, a subscriber information management function, and the like.

The PCRF is connected to the PGW and/or the PDN and has a function such as a function of performing QoS management for data delivery. The PCRF performs, for example, QoS management for a communication path between the UE_A 10 and the PDN. The PCRF may also be an apparatus that creates and/or manages a Policy and Charging Control (PCC) rule and/or a routing rule that each apparatus uses in a case of transmitting and/or receiving user data.

The HSS is connected to the MME and/or the SCEF and has a function such as a function of managing subscriber information. The subscriber information of the HSS is referred to, for example, in a case of access control of the MME. The HSS may also be connected to a location management apparatus different from the MME.

### 3. Description of Terms, Identification Information, and Procedures Used in Embodiments

Next, terms, identification information, and procedures, at least one of which will be used in the embodiments, will be described in advance.

### 3.1. Description of Terms and Identification Information Used in Embodiments

First, highly technical terms and identification information used in procedures which will be used in the embodiments will be described in advance.

A network refers to at least some of the access network_B, the core network_B, and the DN. One or multiple apparatuses included in at least a part of the access network_B, the core network_B, and the DN may be referred to as a network or a network apparatus. In other words, "a network transmits and/or receives a message and/or performs processing" may mean "an apparatus (a network apparatus and/or a control apparatus) in the network transmits and/or receives the message and/or performs the processing". Conversely, "an apparatus in a network transmits and/or receives a message and/or performs processing" may mean "the network transmits and/or receives the message and/or performs the processing".

A session management (SM) message (also referred to as a Non-Access-Stratum (NAS) SM message) may be a NAS message used in a procedure for SM, or may be a control message transmitted and/or received between the UE_A 10 and the SMF_A 230 via the AMF_A 240. Furthermore, the SM message may include a PDU session establishment request message, a PDU session establishment accept message, a PDU session reject message (PDU session establishment reject message), a PDU session modification request message, a PDU session modification command message, a PDU session modification complete message (PDU session modification complete), a PDU session modification command reject message, a PDU session modification reject message, a PDU session release request message, a PDU session release reject message, a PDU session release command message, a PDU session release complete message, and the like. The procedure for SM or the SM procedure may include a PDU session establishment procedure, a PDU session modification procedure, and a PDU session release procedure (UE-requested PDU session release procedure). Note that each procedure may be a procedure initiated by the UE or may be a procedure initiated by the NW.

A Mobility management (MM) message (also referred to as a NAS MM message) may be a NAS message used in a procedure for MM, or may be a control message transmitted and/or received between the UE_A 10 and the AMF_A 240. Furthermore, the MM message may include a Registration request message, a Registration accept message, a Registration reject message, a De-registration request message, a De-registration accept message, a configuration update command message, a configuration update complete message, a Service request message, a Service accept message, a Service reject message, a Notification message, a Notification response message, and the like. The procedure for MM or the MM procedure may include a Registration procedure, a De-registration procedure, a Generic UE configuration update procedure, an authentication and/or authorization procedure, a Service request procedure, a Paging procedure, and a Notification procedure.

A 5G System (5GS) service may be a connection service provided using the core network_B 190. In addition, the 5GS service may be a service different from an EPS service, or may be a service similar to the EPS service.

A non 5GS service may be a service other than the 5GS service and may include an EPS service and/or a non EPS service.

A Packet Data Network (PDN) type indicates a type of PDN connection and includes IPv4, IPv6, IPv4v6, and non-IP. In a case that IPv4 is specified, it indicates that transmission and/or reception of data is performed using IPv4. In a case that IPv6 is specified, it indicates that transmission and/or reception of data is performed using IPv6. In a case that IPv4v6 is specified, it indicates that transmission and/or reception of data is performed using IPv4 or IPv6. In a case that non-IP is specified, it indicates that communication is performed using a communication method other than the IP, not communication using the IP.

Although a Protocol Data Unit/Packet Data Unit (PDU) session can be defined as a relationship between the DN that provides a PDU connectivity service and the UE, the PDU session may be connectivity established between the UE and an external gateway. In the 5GS, the UE establishes a PDU session via the access network_B and the core network_B, and can thereby perform transmission and/or reception of user data to and/or from the DN by using the PDU session. Here, the external gateway may be a UPF, an SCEF, or the like. The UE can perform transmission and/or reception of user data to and/or from an apparatus deployed in the DN, such as an application server, by using the PDU session. Note that each apparatus (the UE, and/or the access network apparatus, and/or the core network apparatus) may associate one or multiple pieces of identification information with a PDU session for management. Note that these pieces of identification information may include one or multiple of a DNN, a QoS rule, a PDU session type, application identification information, NSI identification information, access network identification information, and an SSC mode, and may further include other pieces of information. In addition, in a case that multiple PDU sessions are established, pieces of identification information associated with the PDU sessions may have the same or different details.

The Data Network Name (DNN) may be identification information for identifying the core network and/or an external network such as the DN. Further, the DNN can also be used as information for selecting a gateway such as a PGW/UPF connecting the core networkB 190. In addition, the DNN may correspond to an Access Point Name (APN).

A Protocol Data Unit/Packet Data Unit (PDU) session type indicates a type of PDU session and includes IPv4, IPv6, Ethernet, and Unstructured. In a case that IPv4 is specified, it indicates that transmission and/or reception of data is performed using IPv4. In a case that IPv6 is specified, it indicates that transmission and/or reception of data is performed using IPv6. In a case that Ethernet is specified, it indicates that transmission and/or reception of an Ethernet frame is performed. Alternatively, Ethernet may indicate that communication using the IP is not performed. In a case that Unstructured is specified, it indicates that data is transmitted and/or received to and/or from an application server in the DN or the like by using a Point-to-Point (P2P) tunneling technique. For the P2P tunneling technique, for example, a UDP/IP encapsulation technique may be used. Note that the PDU session type may include the IP, in addition to the above. The IP can be specified in a case that the UE can use both of IPv4 and IPv6.

The Public land mobile network (PLMN) is a communication network that provides mobile radio communication services. The PLMN is a network managed by an operator who is a network operator, and the operator can be identified by a PLMN ID. A PLMN that matches a Mobile Network Code (MNC) and a Mobile Country Code (MCC) of an International Mobile Subscriber Identity (IMSI) of the UE may be a Home PLMN (HPLMN). Furthermore, the UE may hold, in the USIM, an Equivalent HPLMN list for identifying one or multiple Equivalent HPLMNs (EPLMNs). A PLMN different from the HPLMN and/or the EPLMN may be a VPLMN (Visited PLMN). A PLMN with which the UE has successfully registered may be a Registered PLMN (RPLMN).

A tracking area is a single or multiple ranges that can be expressed using location information of the UE_A 10 managed by the core network. Note that the tracking area may include multiple cells. Furthermore, the tracking area may be a range in which a control message such as paging is broadcast, or may be a range in which the UE_A 10 can move without performing a handover procedure. Furthermore, the tracking area may be a routing area, may be a location area, or may be any area similar to these. The tracking area may be hereinafter a TA. The tracking area may be identified by a Tracking Area Identity (TAI) including a Tracking area code (TAC) and a PLMN.

The Registration area is a set of one or multiple TAs allocated to the UE by the AMF. Note that, while moving within one or multiple TAs included in a registration area, the UE_A 10 may be able to move without transmitting and/or receiving a signal for updating the tracking area. In other words, the registration area may be an information group indicating an area in which the UE_A 10 can move without performing a tracking area update procedure. The registration area may be identified by a TAI list configured by one or multiple TAIs.

A UE ID is information for identifying the UE. The UE ID may be a Subscription Concealed Identifier (SUCI), or a Subscription Permanent Identifier (SUPI), or a Globally Unique Temporary Identifier (GUTI), or an International Mobile Subscriber Identity (IMEI), or an IMEI Software Version (IMEISV), or a Temporary Mobile Subscriber Identity (TMSI), for example. Alternatively, the UE ID may be other information configured by an application or within the network. Moreover, the UE ID may be information for identifying the user.

An Always-on PDU session is a PDU session for which user plane resources need to be activated each time a UE transitions from a 5GMM-IDLE state to a 5GMM-CONNECTED state. The UE can request a core network and/or a core network apparatus to establish a PDU session as an Always-on PDU session based on an indication from a upper layer. The core network and/or core network apparatus determines whether a PDU session can be established as an Always-on PDU session. Here, establishment of the Always-on PDU session may mean establishment of a PDU session for C2 communication. Further establishing an Always-on PDU session may mean establishing a PDU session that handles a QoS flow for the C2 communication. Here, the 5GMM-IDLE state may be a CM-IDLE state. The 5GMM-CONNECTED state may be a CM-CONNECTED state. The core network apparatus that determines whether a PDU session can be established as an Always-on PDU session may be an SMF.

A Service-level-AA container Information Element (IE) is an information element for transferring information for authentication and authorization between the UE and the network to the upper layer. The Service-level-AA container information element may include a Service-level device ID, and/or a Service-level-AA server address, and/or a Service-level-AA payload, and/or a Service-level-AA response. Further, the Service-level-AA container information element may include a C2 authorization result, and/or C2 session security information, and/or identification information of UAV-C to pair, and/or flight authorization information. Further, the Service-level-AA container information element may include a Service-level-AA pending indication. Note that the Service-level-AA container information element may be referred to as a Service-level-AA container.

The Service-level device **ID** is an information element for carrying an identity required for authentication and authorization by an external DN. The Service-level device ID may be included in the Service-level-AA container information element. The Service-level device **ID** may include a CAA-level UAV ID.

The Service-level-AA server address is an information element for carrying an address of a service level authentication and authorization server. The Service-level-AA server address may also be included in the Service-level-AA container information element. The Service-level-AA server address may include a USS address.

Service-level-AA payload is an information element for carrying a payload for authentication and authorization between the UE and a service-level-AA server to the upper layer. The Service-level-AA payload may be included in the Service-level-AA container information element. The Service-level-AA payload may include a UUAA aviation payload.

The Service-level-AA response is an information element for providing information related to a service level authentication and authorization request. Specifically, the Service-level-AA response is an information element indicating that the authentication and authorization request to a service level authentication server has succeeded or not succeeded. The Service-level-AA response may also be included in the Service-level-AA container information element.

An Uncrewed Aerial Vehicle (UAV) is a flying drone. The UAV may be a UE. The UAV may be a 3GPP UE that supports UE functions.

The UAV may also be managed by a USS. The UAV may be associated with a UAV controller. Further, the UAV may be associated with the UAV controller and managed by a core network apparatus and/or a UTM. Further, in a case that the UAV is managed in association with the UAV controller, the UAV may be managed by the core network apparatus and/or the UTM as a UAS. The UAV may have its own information (identification information, IP address, location information, etc.) managed by the core network apparatus and/or the UTM. The UE may be read as the UAV.

Further, a UAV capable of using a UAS service may be a UAV capable of using C2 communication and/or direct C2 communication. The UAV capable of using C2 communication and/or direct C2 communication may be a UAV capable of using a UAS service.

The Uncrewed Aerial Vehicle controller (UAV controller) is a controller for operating the UAV. The UAV controller may be a UE. The UAV controller may be a 3GPP UE supporting the UE functions.

The UAV controller may be associated with the UAV. Further, the UAV controller may be associated with the UAV and managed by the core network apparatus and/or the UTM. Further, in a case that the UAV controller is managed in association with the UAV, the UAV controller may be managed by the core network apparatus and/or the UTM as a UAS. The UAV controller may have its own information (identification information, IP address, location information, etc.) managed by the core network apparatus and/or the UTM. The UAV controller may be expressed as a UAC or a UAV-C. The UE may be read as the UAV-C.

Further, a UAV-C capable of using a UAS service may be a UAV-C capable of using C2 communication and/or direct C2 communication. The UAV-C capable of using C2 communication and/or direct C2 communication may be a UAV-C capable of using a UAS service.

The Uncrewed Aerial System (UAS) may include a UAV and related functions. Here, the related functions may include a command and control (C2) link. Further, the C2 link may be a link between the UAV and the control station, or a link between the UAV and the network. Further, the C2 link may be a link for remote identification. The UAS may also include one or multiple UAVs and one or multiple UAV controllers. The UAS may also be managed by the network apparatus and/or the USS.

The Uncrewed Aerial System Service Supplier (USS) is an apparatus having a function of managing the UAV and/or the UAV controller and/or the UAS. The USS may be an apparatus of the DN or an apparatus in the core network. The USS may also be an apparatus for autonomously navigating the UAV. The USS may include a function of managing identification information, an IP address, location information, and the like of the UAV and/or the UAV controller, or may include a function of managing information of the UAV and/or the UAV controller other than those pieces of information described above. Further, the USS may manage the UAV and the UAV controller in association with each other as a UAS. The USS may transmit information for requesting a network service from the core network apparatus. Further, the USS may be an apparatus that provides one or multiple functions or services for managing the range of motor vehicle operations. The USS may be a UAS application server.

The USS may be an apparatus including functions of the UTM. The USS may be an apparatus included in the UTM. The USS may be an apparatus in the UTM. The USS may be expressed as a USS/UTM or a UTM/USS. The USS may be expressed as a network.

The USS may transmit information to the core network and/or the UE through an Uncrewed Aerial Systems Network Function (UAS-NF). The information transmitted from the USS may be regarded as the information transmitted from the UAS-NF. The information received from the USS may be regarded as the information received from the UAS-NF.

The Uncrewed Aerial System Traffic Management (UTM) may be an apparatus including the USS. The UTM may be an apparatus including the USS. The UTM may be read as the USS.

The Command and Control (C2) communication may be a user plane link for delivering, from the UAV controller or the UTM to the UAV, messages including commands and control information for operating the UAV.

The C2 communication may be communication for delivering, from the UAV controller or the UTM to the UAV, messages including commands and control information for operating the UAV. The C2 communication may be a link between the UAV controller and the UAV. The C2 communication may be a link between the USS and the UAV. The C2 communication may be communication between the UAV controller and the UAV. The C2 communication may be communication between the USS and the UAV.

Further, the C2 communication may be a user plane link for reporting telemetry data from the UAV to the UAV controller or UTM. Further, the C2 communication may be a user plane link for delivering, from the UAV controller to the UAV via the UTM, messages including commands and control information for operating the UAV. Here, the C2 communication may be a link realized by the PDU session. Further, the PDU session for the C2 communication may be realized by the Always-on PDU session. Establishing the PDU session for the C2 communication may also mean establishment of the Always-on PDU session. Further, establishment of a PDU session handling a QoS flow for the C2 communication may mean establishment of the Always-on PDU session. Further, the link may be a communication path or a transmission path. The C2 communication may be referred to as C2.

The C2 communication may be interpreted as a communication path for C2 communication. The communication path for C2 communication may be interpreted as C2 communication.

Direct C2 communication may be a link between the UAV and the UAV-C. The direct C2 communication may be communication between the UAV and the UAV-C.

The direct C2 communication may be a direct link between the UAV and the UAV-C. The direct C2 communication may be a direct C2 link between the UAV and the UAV-C. The direct C2 communication may be a communication path on a PC5. The direct C2 communication may be the C2 communication.

Here, the UAV and/or UAV-C may be registered with the network. Further, the link may be a communication path or a transmission path.

The direct C2 communication may be interpreted as a communication path for direct C2 communication. The communication path for direct C2 communication may be interpreted as direct C2 communication.

The C2 authorization result may be a result of authorization for the C2 communication. To be specific, the C2 authorization result may be information indicating a failure or a success in C2 communication authorization.

The result of the authorization for the C2 communication may include a result of the authorization for direct C2 communication. In this case, the C2 authorization result may be information indicating a success in the authorization for the C2 communication using the PDU session, a success in the authorization for the direct C2 communication, or a success in the authorization for both the C2 communication and the direct C2 communication, or a failure in authorization. Alternatively, the C2 authorization result indicates a success or a failure in the authorization for the C2 communication, and the network may notify the UE of a success or a failure in the authorization for the C2 communication using the PDU session and the direct C2 communication, or the UE may recognize the notification.

Alternatively, the Service-level-AA container information element may include a direct C2 authorization result that is an authorization result for the direct C2 communication and that is independent of the C2 authorization result. In this case, the direct C2 authorization result may be information indicating a success or a failure in authorization for the direct C2 communication.

The C2 authorization result may be interpreted as a direct C2 authorization result.

The direct C2 authorization result may be a result of authorization for the direct C2 communication. To be specific, the direct C2 authorization result may be information indicating a failure or a success in the authorization for the direct C2 communication.

The result of the authorization for the C2 communication may include a result of the authorization for C2 communication. In this case, the direct C2 authorization result may be information indicating a success in the authorization for the C2 communication using the PDU session, a success in the authorization for the direct C2 communication, or a success in the authorization for both the C2 communication and the direct C2 communication, or a failure in the authorization. Alternatively, the direct C2 authorization result indicates a success or a failure in the authorization for the direct C2 communication, and the UE may be notified of a success or a failure in the authorization for the direct C2 communication, or the UE may recognize the notification.

Authorization for the C2 communication (Authorization for C2) is an authorization and/or procedure that is required to be performed in a case that the UAV and/or UAV-C establishes a user plane connection for a C2 operation. Here, the user plane connection for the C2 operation may be the C2 communication. In other words, in order for the UAV and/or the UAV-C to establish the C2 communication, the authorization for the C2 communication needs to be performed.

In the authorization for the C2 communication, the UAV and/or the UAV-C may authorize the USS to establish the PDN connection and/or PDU session for the C2 and/or to establish the direct C2 communication. Further, for authorization for the C2 communication, pairing between the UAV and the UAV-C may be authorized and/or Flight Authorization may be performed. The USS may perform the authorization of the pairing between the UAV and the UAV-C and/or the flight authorization.

The authorization for the C2 communication may be performed during the UUAA procedure or may be performed by another procedure. In particular, in a case that the UAV desires to separate the C2 communication with the USS from the C2 communication with the UAV-C, the authorization for the C2 communication may be performed within the procedure for the UAV to establish a new PDU session and/or PDN connection.

The case that the UAV desires to separate the C2 communication with the USS from C2 communication with the UAV-C may be, for example, a case that the UAV requests establishment of the direct C2 communication.

In a case that the UAV and/or the UAV-C requests establishment of the direct C2 communication, the authorization for the C2 communication for the direct C2 communication may be performed during the registration procedure and/or during a UUAA-MM procedure.

The authorization for the C2 communication may be referred to as Authorization for direct C2 communication.

The authorization of the pairing between the UAV and the UAV-C may be the UAV being authorized to be paired with the UAV-C and/or the UAV-C being authorized to be paired with the UAV, and may need to be performed before information is exchanged between the UAV and the UAV-C through the C2 communication.

The flight authorization is authorization for the UAV to fly (flight). The flight authorization may need to have been performed prior to the flight of the UAV. Alternatively, the flight authorization may be performed within the authorization procedure for the C2 communication only in a case that the UAV requests the authorization. In other words, in a case that the C2 communication is authorized, the pairing between the UAV and the UAV-C and/or the flight of the UAV may be authorized.

A CAA-Level UAV ID is information assigned to the UAV by a function of an aviation domain such as the USS. The CAA-Level UAV ID may be used for Remote Identification and tracking, or may be used to identify the UAV. The CAA-Level UAV ID may be information provided to the 3GPP system by the UAV during a UUAA procedure.

The aviation domain may assign a new CAA-Level UAV ID for the UAV at any timing. The new CAA-Level UAV ID may be provided to the UAV and the 3GPP system during a UAS-related procedure.

The CAA-level UAV ID may be referred to as identification information of the UAV or may be referred to as information for identifying the UAV.

A 3GPP UAV ID is information associated with the UAV by the 3GPP system. The 3GPP UAV ID may be information used by the 3GPP system to identify the UAV. The USS may store an association between the CAA-level UAV ID and the 3GPP UAV ID.

The 3GPP UAV ID may be referred to as identification information of the UAV or may be referred to as information for identifying the UAV.

The UE may act as an initiating UE or as a target UE.

The initiating UE may be a UE used in communication between two UEs. The initiating UE may transmit a message to the target UE. The initiating UE may be used in a procedure for establishing the direct C2 communication. The initiating UE may be a UAV or a UAV-C.

The target UE may be a UE used in communication between two UEs. The target UE may transmit a message to the initiating UE. The target UE may be used in a procedure for establishing the direct C2 communication. The target UE may be a UAV or may be a UAV-C.

1st identification information may be information indicating whether the UE supports the direct C2 communication. The 1st identification information may be information indicating that the UE supports the direct C2 communication. The 1st identification information may be information indicating that the UE does not support the direct C2 communication.

The 1st identification information may be information indicating a request for authentication and/or authorization of establishment of the direct C2 communication. The 1st identification information may be information indicating a request for authentication and/or authorization of the use of the direct C2 communication.

The 1st identification information may be a 5GMM capability. The 1st identification information may be information included in the 5GMM capability.

2nd identification information may be information indicating a request for authentication and/or authorization of establishment of the direct C2 communication and/or the C2 communication using the PDU session. The 2nd identification information may be information indicating a request for authentication and/or authorization of establishment of the direct C2 communication and/or the C2 communication.

The 2nd identification information may be information indicating a request for authentication and/or authorization of simultaneous establishment of the direct C2 communication and the C2 communication. The 2nd identification information may be information indicating a request for authentication and/or authorization of simultaneous use of the direct C2 communication and the C2 communication.

The 2nd identification information may be information indicating whether the UE supports the direct C2 communication and/or the C2 communication. The 2nd identification information may be information indicating that the UE supports the direct C2 communication and/or the C2 communication. The 2nd identification information may be information indicating that the UE does not support the direct C2 communication and/or the C2 communication.

The 2nd identification information may be a 5GSM capability. The 2nd identification information may be information included in the 5GSM capability.

The 1st identification information and/or the 2nd identification information may be information included in the Service-level-AA container.

Further, the first identification information and/or the second identification information may also be information selected or determined based on a UE configuration, and/or a UE status, and/or a user policy, and/or a request from an application.

3rd identification information may be source user information (source user info). The 3rd identification information may be an application layer ID of the initiating UE. The 3rd identification information may be the application layer ID of the UE transmitting the message. The 3rd identification information received from the upper layer. The 3rd identification information may be source user information in which the application layer ID of the initiating UE received from the upper layer is set.

The 3rd identification information may be information included in a message used for communication between two UEs.

4th identification information may also be information identifying an application of the UAS. The 4th identification information may be information for requesting the application of the UAS. Further, the 4th identification information may be information for using the application of the UAS. Further, the 4th identification information may be information used for the application of the UAS.

Further, the 4th identification information may be a ProSe identifier.

The 5th identification information may be target user information (target user info). The 5th identification information may be the application layer ID of the target UE. The 5th identification information may be the application layer ID of the UE receiving a message. The 5th identification information may be information received from the upper layer. The 5th identification information may be target user information in which the application layer ID of the target UE received from the upper layer is set.

The 5th identification information may be information included in a message used for communication between two UEs.

6th identification information is a cause value. The 6th identification information may be a cause value indicating a reason causing the communication path for direct C2 communication to be released.

Here, the cause value may indicate that the direct C2 communication with the target UE is not allowed. Further, the cause value may indicate that the direct C2 communication with the target UE is not required. The cause value may indicate that the direct C2 communication is not available. The cause value may indicate lack of resources for the direct C2 communication. The cause value may indicate a state of congestion. The cause value may indicate a protocol error.

The cause value may be (#1 direct communication to the target UE not allowed), or (#2 direct communication to the target UE no longer needed), or (#4 direct connection is not available anything more), or (#5 lack of resources for 5G ProSe direct link), or (#13 congestion situation), or (#111 protocol error, unspecified).

Which piece of information in the information described above the cause value indicates may be selected or determined based on subscriber information, and/or a network status, and/or user registration information, and/or a context held in the UE, or the like. Which piece of information in the information described above the cause value indicates may be selected or determined based on information indicated by the network and/or the USS.

The cause value may also be indicated by the network and/or the USS.

10th identification information may be information indicating whether the network authenticates and/or authorizes the direct C2 communication. The 10th identification information may be information indicating that the network authenticates and/or authorizes the direct C2 communication. Further, the 10th identification information may be information indicating that the network does not authenticate and/or authorize the direct C2 communication.

The 10th identification information may be information indicating whether the network allows the direct C2 communication. The 10th identification information may be information indicating that the network allows the direct C2 communication. The 10th identification information may be information indicating that the network does not allow the direct C2 communication.

11th identification information may be information indicating that the direct C2 communication and/or the C2 communication using the PDU session is authenticated and/or authorized. The 11th identification information may be information indicating that the direct C2 communication and/or the C2 communication is authenticated and/or authorized. The 11th identification information may be information indicating that the direct C2 communication and/or the C2 communication is not authenticated and/or authorized. The 11th identification information may be information indicating whether to authenticate and/or authorize the direct C2 communication and/or the C2 communication.

The 11th identification information may be information indicating that the direct C2 communication and/or the C2 communication is allowed. The 11th identification information may be information indicating that the direct C2 communication and/or the C2 communication is not allowed. The 11th identification information may be information indicating whether to allow the direct C2 communication and/or the C2 communication.

The 10th identification information and/or the 11th identification information may be information included in a Service-level-AA container. The 10th identification information and/or the 11th identification information may be a C2 authorization result and/or a Service-level-AA response and/or a direct C2 authorization result included in the Service-level-AA container, or may be information included in the C2 authorization result and/or the Service-level-AA response and/or the direct C2 authorization result.

The 10th identification information and/or the 11th identification information may be information transmitted by the USS.

The 10th identification information and/or the 11th identification information may also be information that the network selects or determines based on received identification information and/or information associated with an NSI and/or the network capability information and/or the operator policy and/or the network status and/or the user registration information, or the like.

12th identification information may be information identifying the UAV. The 12th identification information may be information identifying the UAV-C. The 12th identification information may be information identifying a UAV to be paired with the UAV-C. The 12th identification information may be information identifying a UAV-C to be paired with the UAV. The 12th identification information may be information used in the direct C2 communication.

The 12th identification information may be information included in the Service-level-AA container. The 12th identification information may be a Service-level device ID included in the Service-level-AA container.

The 12th identification information may be a CAA-level UAV ID or a 3GPP UAV ID.

13th identification information may be source user information (source user info). The 13th identification information may be the application layer ID of the target UE. Alternatively, the 13th identification information may be the application layer ID of the UE transmitting a message. The 13th identification information may be information received from the upper layer. The 13th identification information may be source user information in which the application layer ID of the target UE received from the upper layer is set.

The 13th identification information may be information included in a message used for communication between two UEs.

14th identification information may be information identifying an application of the UAS. The 14th identification information may be information for requesting the application of the UAS. The 14th identification information may be information for using the application of the UAS. The 14th identification information may be information used for the application of the UAS.

The 14th identification information may be information for identifying the application of the UAS accepted by the target UE. The 14th identification information may be information for requesting the application of the UAS accepted by the target UE. The 14th identification information may be information for using the application of the UAS accepted by the target UE. The 14th identification information may be information used for the application of the UAS accepted by the target UE.

The 14th identification information may be a response to the 5th identification information. The 14th identification information may be the 5th identification information accepted by the target UE.

The 14th identification information may be a ProSe identifier.

15th identification information may be information indicating that the authentication and/or authorization for the direct C2 communication is revoked. The 15th identification information may be information indicating whether to revoke the authentication and/or authorization for the direct C2 communication.

The 15th identification information may be information indicating that allowance of the direct C2 communication is revoked. The 15th identification information may be information indicating whether to revoke the allowance of the direct C2 communication.

16th identification information may be information indicating that the authentication and/or authorization for the direct C2 communication and/or C2 communication using the PDU session is revoked. The 16th identification information may be information indicating whether to revoke the authentication and/or authorization for the direct C2 communication and/or C2 communication.

The 16th identification information may be information indicating that the allowance of the direct C2 communication and/or the C2 communication is revoked. The 16th identification information may be information indicating whether to revoke the allowance of the direct C2 communication and/or the C2 communication.

The 15th identification information and/or the 16th identification information may be information included in the Service-level-AA container. The 15th identification information and/or the 16th identification information may be a C2 authorization result and/or a Service-level-AA response and/or a direct C2 authorization result included in the Service-level-AA container, or may be information included in the C2 authorization result and/or the Service-level-AA response and/or the direct C2 authorization result.

The 15th identification information and/or the 16th identification information may be information transmitted by the USS.

Furthermore, the 15th identification information and/or the 16th identification information may be information that the network selects or determines based on received identification information and/or information associated with an NSI and/or the network capability information and/or the operator policy and/or the network status and/or the user registration information, or the like.

17th identification information is a cause value indicating a reason causing a registration procedure or a PDU session establishment procedure to be rejected. The 17th identification information may be a cause value indicating a reason causing a PDU session modification procedure to be initiated. The 17th identification information may be a cause value indicating a reason causing a PDU session release procedure to be initiated. The 17th identification information may be a 5GS Session Management (5GSM) cause value.

The 17th identification information may be a cause value indicating a reason causing the authentication and/or authorization for the direct C2 communication and/or C2 communication using the PDU session to be revoked.

The 17th identification information may be a cause value indicating a reason causing the allowance of the direct C2 communication and/or the C2 communication to be revoked.

The 17th identification information may be information included in the Service-level-AA container. The 17th identification information may be information included in a C2 authorization result and/or a Service-level-AA response and/or a direct C2 authorization result.

Furthermore, the 17th identification information may also be information that the network selects or determines based on received identification information, information associated with an NSI and/or the network capability information and/or the operator policy and/or the network status and/or the user registration information, or the like.

18th identification information is a timer value. The 18th identification information may be a timer value indicating a grace time until the PDU session for the direct C2 communication and/or C2 communication is released. The 18th identification information may be a timer value indicating a time at which the PDU session for the direct C2 communication and/or C2 communication is released.

The 18th identification information may be a timer value in which a start time and/or an end time is designated.

The 18th identification information may indicate that, in a case that the timer value is 0, the PDU session for the direct C2 communication and/or C2 communication should be released immediately after the reception of the 18th identification information. The 18th identification information may indicate that, in the case that the timer value is 0, the authentication and/or authorization for the direct C2 communication and/or C2 communication using the PDU session is revoked. The 18th identification information may indicate that, in the case that the timer value is 0, the direct C2 communication and/or the C2 communication using the PDU session is not authenticated and/or authorized.

The 18th identification information may be information included in the Service-level-AA container. The 18th identification information may be information included in a C2 authorization result and/or a Service-level-AA response and/or a direct C2 authorization result.

Furthermore, the 18th identification information may also be information that the network selects or determines based on received identification information and/or information associated with an NSI and/or the network capability information and/or the operator policy and/or the network status and/or the user registration information, or the like.

### 3.2. Description of Procedures Used in Embodiments

Next, procedures used in each embodiment will be described. Note that the procedure used in each embodiment includes the Registration procedure. Each procedure will be described below.

Note that, in each embodiment, a case that each of the HSS and the UDM, the PCF and the PCRF, the SMF and the PGW-C, and the UPF and the PGW-U is configured as a single apparatus (that is, the same physical hardware, or the same logical hardware, or the same software) as illustrated in FIG. 2 will be described as an example. However, the details described in the present embodiment can also be applied to a case that each of the combinations is configured as different apparatuses (that is, different pieces of physical hardware, or different pieces of logical hardware, or different pieces of software). For example, between the apparatuses/functions, data may be directly transmitted and/or received, data may be transmitted and/or received via an N26 interface between the AMF and the MME, or data may be transmitted and/or received via the UE.

### 3.2.1. Registration Procedure

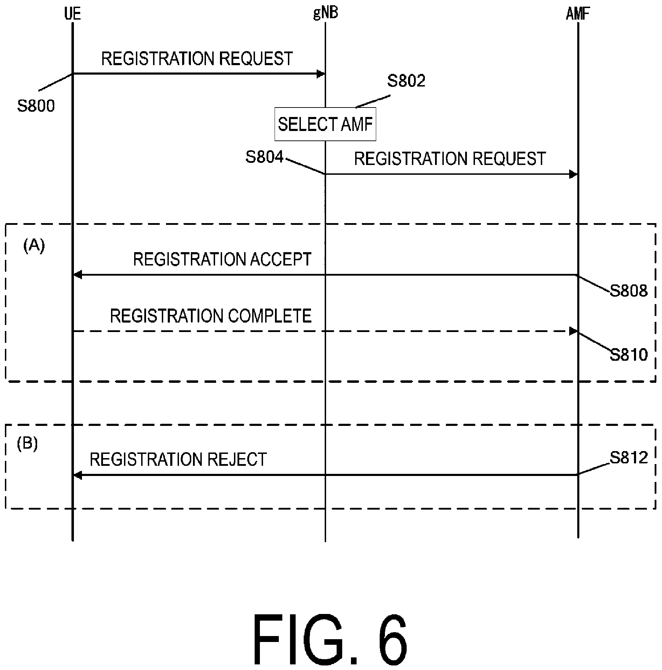

First, the Registration procedure will be described with reference to FIG. 6. The registration procedure is a procedure in the 5GS. Hereinafter, the registration procedure will be referred to as the present procedure. The registration procedure is a procedure for registration with the access network_B, and/or the core network_B, and/or the DN initiated by the UE. In a case that the UE is in a state of not being registered with the network, for example, the UE can perform the present procedure at any timing, for example, a power input time. In other words, the UE can initiate the present procedure at any timing as long as the UE is in a deregistered state (an RM-DEREGISTERED state). Each of the apparatuses (especially, the UE and the AMF) can transition to a registered state (an RM-REGISTERED state) based on completion of the Registration procedure.

The registration procedure may be an initial registration initiated by the UE. The registration procedure may be mobility and periodic registration. The registration procedure may be the MM procedure.

In addition, the registration procedure may be a procedure for updating position registration information of the UE on the network, and/or periodically provide notification of the state of the UE from the UE to the network, and/or updating a specific parameter related to the UE on the network.

The registration in the present procedure may be registration for the C2 communication or registration for the direct C2 communication. The PDU session in the present procedure may be registration for the UAS service.

The UE may also initiate a registration procedure in a case that the UE has performed mobility across a TA. In other words, the UE may initiate a registration procedure in a case where the UE has moved to a TA different from TAs indicated in a stored TA list. In addition, the UE may initiate the present procedure in a case that a running timer expires. In addition, the UE may initiate the registration procedure in a case that a context of each apparatus needs to be updated due to disconnection and/or invalidation of a PDU session. Furthermore, in a case that there has been a change in capability information and/or a preference, related to PDU session establishment of the UE, the UE may initiate the registration procedure. In addition, the UE may periodically initiate the registration procedure. The UE may also initiate a registration procedure based on completion of a UE configuration update procedure. Note that the UE is not limited to this configuration, and can perform the registration procedure at any timing.

The UE may also initiate a registration procedure periodically even in a registered state. In other words, the UE may initiate a registration procedure based on expiration of a timer.

The registration procedure performed based on the mobility of the UE and the registration procedure performed periodically may also be expressed as a registration procedure for mobility and registration update. In other words, the registration procedure for mobility and registration update may be a registration procedure performed based on the mobility of the UE or may be a registration procedure performed periodically. The registration procedure for mobility and registration update may also be a registration procedure performed based on configuration update of the UE. The registration procedure for mobility and registration update may also be a registration procedure performed to establish a communication path for transmitting and/or receiving user data. The registration procedure for mobility and registration update may also be a registration procedure performed based on a request from the network. In other words, the registration procedure for mobility and registration update may be a registration procedure other than an initial registration procedure. Hereinafter, the registration procedure for mobility and registration update may be referred to as the present procedure.

Each step of the registration procedure will be described below. The registration procedure described below may be an initial registration procedure or a registration procedure for mobility and registration update.

First, the UE transmits a Registration request message to the AMF (S800) (S802) (S804) to initiate the registration procedure. Specifically, the UE transmits an RRC message including a registration request message to the 5G AN (or the gNB) (S800). The registration request message is a NAS message. The RRC message may be a control message transmitted and/or received between the UE and the 5G AN (or the gNB). In addition, the NAS message is processed in the NAS layer, and the RRC message is processed in the RRC layer. Note that the NAS layer is a layer higher than the RRC layer.

Here, the UE may transmit a registration request message and/or an RRC message including one or more pieces of identification information out of the 1st identification information and the 2nd identification information. More specifically, the UE can transmit a registration request message and/or an RRC message including one or more pieces of identification information out of the 1st identification information and the 2nd identification information and may also transmit a control message different from such messages, for example, a control message of a layer below the RRC layer (e.g., the MAC layer, the RLC layer, or the PDCP layer), including the one or more pieces of identification information.

Note that the UE may transmit these pieces of identification information, to thereby indicate that the UE supports each function, or indicate the request from the UE. In addition, in a case that multiple pieces of identification information are transmitted and/or received, two or more pieces of identification information of these pieces of identification information may be configured as one or multiple pieces of identification information. Note that information indicating support for each function and information indicating a request to use each function may be transmitted and/or received with the same piece of identification information or may be transmitted and/or received as different pieces of identification information.

Here, by transmitting the registration request message, the UE may indicate the content of each piece of the identification information to the network.

In other words, in a case that the UE supports the direct C2 communication, and/or in a case that the UE requests the network to authenticate and/or authorize establishment of the direct C2 communication, and/or in a case that the UE requests the network to authenticate and/or authorize the use of the direct C2 communication, the UE may transmit the 1st identification information included in the registration request message or transmit the 1st identification information along with the registration request message.

In other words, in a case that the UE supports the direct C2 communication, and/or in a case that the UE requests the network to authenticate and/or authorize establishment of the direct C2 communication and/or the C2 communication using a PDU session, and/or in a case that the UE requests the network to authenticate and/or authorize utilization of the direct C2 communication and/or the C2 communication using a PDU session, the UE may transmit the 2nd identification information included in the registration request message or transmit the 2nd identification information along with the registration request message.

Further, by including, in the registration request message, one or more pieces of identification information out of the 1st identification information and the 2nd identification information, the UE may indicate, to the network, the content indicated by the identification information included in the registration request message. Further, by including, in the registration request message, one or more pieces of identification information out of the 1st identification information and the 2nd identification information, the UE may request, from the network, the content indicated by the identification information included in the registration request message.

Note that the UE may select or determine whether to include, in the registration request message, one or more pieces of identification information out of the 1st identification information and the 2nd identification information based on subscriber information, network status, user registration information, a context held by the UE, and/or the like.

Note that the UE may transmit the registration request message including identification information other than the 1st identification information and the 2nd identification information. Specifically, the UE may include the Service-level-AA container in the registration request message. Alternatively, the UE may use the Service-level-AA container to transmit the 1st identification information and the 2nd identification information. Specifically, the UE may include, in the Service-level-AA container, one or more pieces of identification information out of the 1st identification information and the 2nd identification information, and may further include the Service-level-AA container in the registration request message.

The UE may initiate the PDU session establishment procedure during the registration procedure by transmitting the registration request message including the SM message or by transmitting the SM message along with the registration request message. Here, the SM message may be a PDU session establishment request message.

In a case of receiving the RRC message including the registration request message, the 5G AN (or the gNB) selects an AMF to which to transfer the registration request message (S802). The 5G AN (or the gNB) can select an AMF based on information included in the registration request message and/or the RRC message. The 5G AN (or the gNB) extracts the registration request message from the received RRC message and transfers the registration request message to the selected AMF (S804).

The AMF may perform a first condition fulfillment determination in a case where the AMF has received a registration request message. The first condition fulfillment determination is used by the network (or AMF) to determine whether to accept the request from the UE. In a case that the first condition fulfillment determination is true, the AMF initiates the procedure of (A) of FIG. 6, whereas in a case that the first condition fulfillment determination is false, the AMF initiates the procedure of (B) of FIG. 6.

Note that the first condition fulfillment determination may be performed based on reception of the registration request message, and/or each piece of identification information included in a registration request message, and/or the subscriber information, and/or the network capability information, and/or the operator policy, and/or the network status, and/or the user registration information, and/or the context held in the AMF, or the like. For example, the first condition fulfillment determination may be true in a case that the network allows the request from the UE, and the first condition fulfillment determination may be false in a case that the network does not allow the request from the UE. In addition, in a case that a network with which the UE is to be registered and/or an apparatus in the network supports the function requested by the UE, the first condition fulfillment determination may be true, whereas in a case that the network and/or the apparatus does not support the function requested by the UE, the first condition fulfillment determination may be false. Furthermore, in a case that the transmitted and/or received identification information is allowed, the first condition fulfillment determination may be true, whereas in a case that the transmitted and/or received identification information is not allowed, the first condition fulfillment determination may be false. The conditions for determining whether the first condition fulfillment determination is true or false may not be limited to the conditions described above.

First, the case that the first condition fulfillment determination is true will be described. In the procedure of (A) of FIG. 6, first, the AMF can perform the 4th condition fulfillment determination. The fourth condition fulfillment determination is used by the AMF to determine whether to transmit and/or receive an SM message to and/or from an SMF.

The fourth condition fulfillment determination may be made based on whether the AMF has received an SM message. The fourth condition fulfillment determination may be made based on whether an SM message is included in the registration request message. For example, the fourth condition fulfillment determination may be true in a case that the AMF has received an SM message and/or in a case that an SM message is included in the registration request message and false in a case that the AMF has received no SM message and/or in a case that no SM message is included in the registration request message. The conditions for determining whether the fourth condition fulfillment determination is true or false may not be limited to the conditions described above.

Next, based on reception of the registration request message and/or completion of transmission and/or reception of the SM message to and/or from the SMF, the AMF transmits a registration accept message to the UE via the 5G AN (or the gNB) as a response message to the registration request message (S808). For example, in a case that the fourth condition fulfillment determination is false, the AMF may transmit a registration accept message based on receiving the registration request message from the UE. In a case where the fourth condition fulfillment determination is true, the AMF may transmit a registration accept message based on completion of transmission and/or reception of an SM messages to and/or from the SMF. The registration accept message is a NAS message transmitted and/or received over the N1 interface, but is incorporated into an RRC message and transmitted and/or received between the UE and the 5G AN (the gNB).

The AMF may transmit the registration accept message including one or more pieces of identification information out of the 10th to 12th and 15th to 18th identification information. By transmitting such identification information, the AMF may indicate that the network supports each function or may indicate that the request from the UE has been accepted. In addition, in a case that multiple pieces of identification information are transmitted and/or received, two or more pieces of identification information of these pieces of identification information may be configured as one or multiple pieces of identification information. Note that information indicating support for each function and information indicating a request to use each function may be transmitted and/or received with the same piece of identification information or may be transmitted and/or received as different pieces of identification information.

Further, by including, in the registration accept message, one or more pieces of identification information out of the 10th to 12th and 15th to 18th identification information, the network may indicate, to the UE, the content indicated by the identification information included in the registration accept message. Further, by including, in the registration accept message, one or more pieces of identification information out of the 10th to 12th and 15th to 18th identification information, the network may allow, for the UE, the content indicated by the identification information included in the registration accept message.

Here, by transmitting the registration accept message, the network may indicate the content of the identification information to the UE.

Note that the AMF may select or determine whether to include, in the registration accept message, one or more pieces of identification information out of the 10th to 12th and 15th to 18th identification information based on each piece of received identification information and/or subscriber information and/or network capability information and/or the operator policy, and/or the network status and/or the user registration information and/or the context held in the AMF, or the like.

Note that the AMF may transmit the registration accept message including identification information other than the 10th to 12th and 15th to 18th identification information. Specifically, the AMF may include the Service-level-AA container in the registration accept message. Alternatively, the AMF may use the Service-level-AA container to transmit the 10th to 12th and 15th to 18th identification information. Specifically, the AMF may include, in the Service-level-AA container, one or more pieces of identification information out of the 10th to 12th and 15th to 18th identification information, and may further include the Service-level-AA container in the registration accept message. The UE may receive the registration accept message including the Service-level-AA container.

The AMF can transmit the registration accept message including the SM message or transmit the SM message along with the registration accept message. However, this transmission method may be performed in a case that the SM message may be included in the registration request message and the fourth condition fulfillment determination is true. This transmission method may be performed in a case that the SM message is included with the registration request message and the fourth condition fulfillment determination is true. By performing such a transmission method as described above, the AMF can indicate that a procedure for SM has been accepted in the registration procedure. Here, the SM message may be a PDU session establishment request message or may be a PDU session establishment accept message.

The AMF may indicate that the request from the UE has been accepted by transmitting a registration accept message based on each piece of received identification information, the subscriber information and/or the network capability information and/or the operator policy and/or the network status and/or the user registration information and/or the context held by the AMF, or the like.

The AMF may also transmit a registration accept message including information indicating that a part of the request from the UE has been rejected or may transmit information indicating that a part of the request from the UE has been rejected to indicate a reason causing a part of the request from the UE to be rejected. The UE may also recognize a reason causing a part of the request from the UE to be rejected by receiving information indicating that a part of the request from the UE has been rejected. The reason for rejection may be information indicating that content indicated by the identification information received by the AMF is not allowed.

The UE receives the registration accept message from the AMF via the 5G AN (the gNB) (S808). By receiving the registration accept message, the UE can recognize that the request from the UE in the registration request message has been accepted and the content of various identification information included in the registration accept message.

Further, the UE can further transmit a registration complete message to the AMF via the 5G AN (the gNB) as a response message to the registration accept message (S810). Here, although the registration complete message is a NAS message transmitted and/or received over the N1 interface, the registration complete message is transmitted and/or received between the UE and the 5G AN (gNB) by being included in an RRC message.

The AMF receives the registration complete message via the 5G AN (the gNB) (S810). Each apparatus completes the procedure of (A) of FIG. 6, based on transmission and/or reception of the registration accept message and/or the registration complete message.

Next, the case that the first condition fulfillment determination is false will be described. In the procedure of (B) of FIG. 6, the AMF transmits a Registration reject message to the UE via the 5G AN (gNB) as a response message to the registration request message (S812). Here, the registration reject message is a NAS message transmitted and/or received over the N1 interface, but is incorporated into an RRC message and transmitted and/or received between the UE and the 5G AN (the gNB).

Here, the AMF may transmit the registration reject message including one or more pieces of identification information out of the 10th to 12th and 15th to 18th identification information. Furthermore, by transmitting one or more pieces of identification information out of the 10th to 12th and 15th to 18th identification information, the AMF may indicate that the request from the UE has been rejected or indicate the reason causing the request from the UE to be rejected.

Further, by including, in the registration reject message, one or more pieces of identification information out of the 10th to 12th and 15th to 18th identification information, the network may indicate, to the UE, the content indicated by the identification information included in the registration reject message. Further, by including, in the registration reject message, one or more pieces of identification information out of the 10th to 12th and 15th to 18th identification information, the network may not need to allow, for the UE, the content indicated by the identification information included in the registration reject message.

Note that the AMF may select or determine whether to include, in the registration reject message, one or more pieces of identification information out of the 10th to 12th and 15th to 18th identification information based on each piece of received identification information and/or the subscriber information and/or the network capability information and/or the operator policy and/or the network status and/or the user registration information and/or the context held in the AMF, or the like.

The AMF may also transmit a registration reject message to indicate that the request from the UE in the registration request message has been rejected. The AMF may also transmit a registration reject message including information indicating a reason for rejection or may transmit a reason for rejection to indicate the reason for rejection. Further, the UE may recognize a reason causing the request from the UE to be rejected by receiving information indicating the reason causing the request from the UE to be rejected. The reason for rejection may be information indicating that content indicated by the identification information received by the AMF is not allowed.

The UE receives the registration reject message from the AMF via the 5G AN (the gNB) (S812). By receiving the registration reject message, the UE can recognize that the request from the UE in the registration request message has been rejected and the content of various identification information included in the registration reject message. The UE may also recognize that the request from the UE has been rejected in a case that the UE does not receive a registration reject message even in a case that a prescribed period of time has elapsed after transmitting a registration request message. Each apparatus completes the procedure (B) in the present procedure based on transmission and/or reception of the registration reject message.

Note that the procedure of (B) of FIG. 6 may be initiated in a case that the procedure of (A) of FIG. 6 is cancelled.

Each apparatus completes the registration procedure, based on completion of the procedure of (A) or (B) of FIG. 6. Note that each apparatus may transition to a state (RM_REGISTERED state) in which the UE is registered with the network, based on completion of the procedure of (A) of FIG. 6, may maintain a state (RM_DEREGISTERED state) in which the UE is not registered with the network or may transition to a state in which the UE is not registered with the network, based on completion of the procedure of (B) of FIG. 6. The transition of each apparatus to each state may be performed based on completion of the registration procedure or may be performed based on establishment of a PDU session.

The UE may complete the registration procedure based on reception of the registration accept message or the registration reject message.

Furthermore, each apparatus may perform processing based on information transmitted and/or received in the registration procedure, based on completion of the registration procedure. For example, in a case that information indicating that a part of the request from the UE has been rejected is transmitted and/or received, the reason for rejection of the request from the UE may be recognized. Further, each apparatus may perform the present procedure again or may perform a registration procedure with the core network_B or another cell based on the reason causing the request from the UE to be rejected.

Moreover, the UE may store the identification information received along with the registration accept message and/or the registration reject message or may recognize determination of the network based on the completion of the registration procedure.

Further, in a case of receiving one or more pieces of identification information out of the 10th to 12th and 15th to 18th identification information, the UE may recognize the content indicated by the received identification information. Further, in the case of receiving one or more pieces of identification information out of the 10th to 12th and 15th to 18th identification information, the UE may recognize that the content indicated by the identification information included in the registration accept message or the registration reject message has been allowed.

Here, in a case of receiving the 10th identification information, the UE may initiate an establishment procedure for a direct C2 communication. In other words, in the case of receiving the 10th identification information, the UE may recognize that a direct C2 communication has been authenticated and/or authorized, and initiate the establishment procedure for the direct C2 communication.

In the case of receiving the 10th identification information, the UE may not need to initiate an establishment procedure for a direct C2 communication. In other words, in the case of receiving the 10th identification information, the UE may recognize that a direct C2 communication has not been authenticated and/or authorized and may not need to initiate the establishment procedure for the direct C2 communication.

In a case of receiving the 11th identification information, the UE may initiate an establishment procedure for a direct C2 communication and/or a PDU session establishment procedure for a C2 communication. In other words, in the case of receiving the 11th identification information, the UE may recognize that a direct C2 communication and/or a C2 communication using a PDU session have been authenticated and/or authorized, and initiate the establishment procedure for the direct C2 communication and/or the PDU session establishment procedure for the C2 communication.

In the case of receiving the 11th identification information, the UE may not need to initiate an establishment procedure for a direct C2 communication and/or a PDU session establishment procedure for a C2 communication. In other words, in the case of receiving the 11th identification information, the UE may recognize that a direct C2 communication and/or a C2 communication using a PDU session have not been authenticated and/or authorized and may not need to initiate the establishment procedure for the direct C2 communication and/or the PDU session establishment procedure for the C2 communication.

In a case of receiving the 12th identification information, the UE may configure the identification information of the UAV or UAV-C. In the case of receiving the 12th identification information, the UE may delete the stored identification information of the UAV or UAV-C and store the received identification information of the UAV or UAV-C.

In a case of receiving the 15th identification information, the UE may initiate a release procedure for a direct C2 communication. In other words, in the case of receiving the 15th identification information, the UE may recognize that the authentication and/or authorization for the direct C2 communication has been revoked and initiate the release procedure for the direct C2 communication.

In a case of receiving the 16th identification information, the UE may initiate a release procedure for a direct C2 communication and/or a PDU session release procedure for a C2 communication. In other words, in the case of receiving the 16th identification information, the UE may recognize that authentication and/or authorization for the direct C2 communication and/or C2 communication using the PDU session have been revoked and initiate the release procedure for the direct C2 communication and/or the PDU session release procedure for the C2 communication.

In a case of receiving the 18th identification information, the UE may configure the timer value indicated by the 18th identification information for a first timer. In the case of receiving the 18th identification information, the UE may start the first timer with the timer value indicated by the 18th identification information. Further, in a case that the first timer expires, the UE may initiate a release procedure of a communication path for a direct C2 communication. Before the first timer expires, the UE may initiate a release procedure of a communication path for a direct C2 communication.

Here, the first timer may be a timer for managing a grace time until a PDU session for a direct C2 communication and/or C2 communication is released. The first timer may be a timer for managing a time at which a PDU session for a direct C2 communication and/or C2 communication is released. The first timer may be a timer for managing a timer value indicated by the 18th identification information.

Note that the behavior of the UE described above may be performed after receiving the registration accept message or the registration reject message. The behavior of the UE described above may be performed after receiving one or more pieces of identification information out of the 10th to 12th and 15th to 18th identification information.

By receiving the registration accept message or the registration reject message, the UE may recognize the content of the identification information.

A behavior to be performed in a case that each piece of identification information has been received may be performed based on the received identification information.

### 3.2.2. PDU Session Establishment Procedure

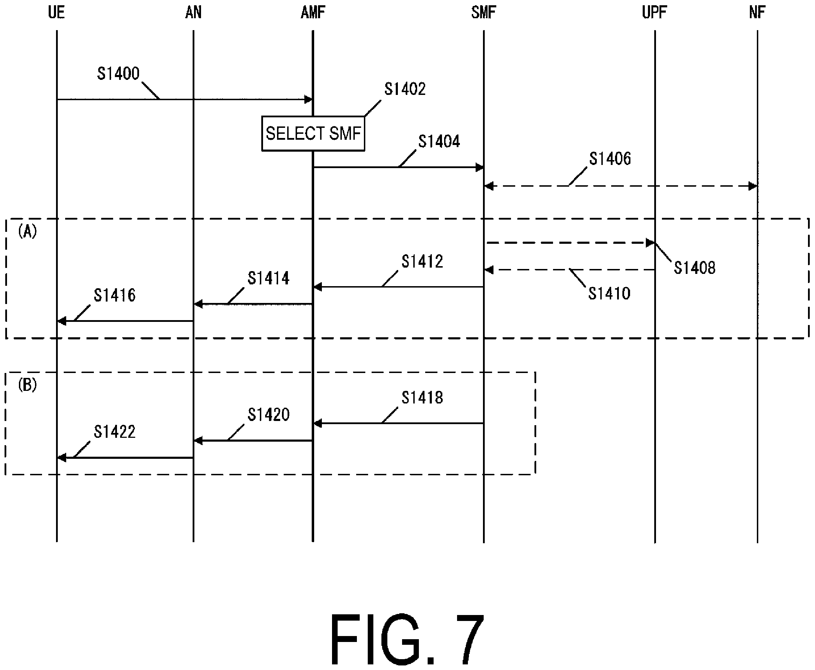

Next, the behavior of each apparatus in a case that the UE performs the PDU session establishment procedure will be described with reference to FIG. 7. The PDU session establishment procedure may be hereinafter referred to as the present procedure. The PDU session establishment procedure may be an SM procedure.

The PDU session in the present procedure may be a PDU session for C2 communication or may be a PDU session for direct C2 communication. The PDU session in the present procedure may be a PDU session for the UAS service.

Note that the present procedure may be performed after the registration procedure is performed one or more times.

First, the UE transmits the PDU session establishment request message to the SMF (S1400) (S1402) (S1404) and initiates the PDU session establishment procedure. Then, the SMF receives the PDU session establishment request message from the UE.

Specifically, the UE transmits a NAS message including an N1 SM container including the PDU session establishment request message to the AMF via the access network (S1400), to thereby initiate the PDU session establishment procedure. The NAS message may be, for example, a message transmitted via the N1 interface, and may be an uplink NAS transport (UL NAS TRANSPORT) message.

Here, the UE may transmit the PDU session establishment request message and/or the NAS message including one or more pieces of identification information out of at least the 1st identification information and the 2nd identification information.

Note that the UE may transmit these pieces of identification information, to thereby indicate that the UE supports each function, or indicate the request from the UE. In addition, in a case that multiple pieces of identification information are transmitted and/or received, two or more pieces of identification information of these pieces of identification information may be configured as one or multiple pieces of identification information. Note that information indicating support for each function and information indicating a request to use each function may be transmitted and/or received with the same piece of identification information or may be transmitted and/or received as different pieces of identification information.

Here, the UE may transmit the PDU session establishment request message or the NAS message, to thereby indicate the content of each piece of the identification information to the network.

In other words, in a case that the UE supports the direct C2 communication, and/or in a case that the UE requests the network to authenticate and/or authorize establishment of the direct C2 communication, and/or in a case that the UE requests the network to authenticate and/or authorize utilization of the direct C2 communication, the UE may transmit the 1st identification information included in the PDU session establishment request message or included in the NAS message along with the PDU session establishment request message.

In other words, in a case that the UE supports the direct C2 communication, and/or in a case that the UE requests the network to authenticate and/or authorize establishment of the direct C2 communication and/or the C2 communication using the PDU session, and/or in a case that the UE requests the network to authenticate and/or authorize utilization of the direct C2 communication and/or the C2 communication using the PDU session, the UE may transmit the 2nd identification information included in the PDU session establishment request message or included in the NAS message along with the PDU session establishment request message.

The access network may indicate the 3GPP access or the non-3GPP access, and include a base station apparatus. In other words, the UE transmits the NAS message to the AMF via the base station apparatus.

By transmitting the PDU session establishment request message, the UE may request establishment of a PDU session supporting the C2 communication. In other words, by transmitting the PDU session establishment request message, the UE may request establishment of a PDU session supporting a QoS flow for the C2 communication.

In a case of requesting establishment of the PDU session supporting the C2 communication, the UE may request establishment of the Always-on PDU session. In other words, in a case of requesting establishment of the PDU session supporting the QoS flow for the C2 communication, the UE may request establishment of the Always-on PDU session.

Note that the UE may select or determine whether to include one or more pieces of identification information out of the 1st and 2nd identification information in a PDU session establishment request message based on subscriber information and/or a network status and/or user registration information and/or a context held in the UE, or the like.

Note that the UE may include identification information other than the 1st identification information and the 2nd identification information in the PDU session establishment request message for transmission. Specifically, the UE may include the Service-level-AA container in the PDU session establishment request message. Alternatively, the UE may use the Service-level-AA container to transmit the 1st identification information and the 2nd identification information. Specifically, the UE may include, in the Service-level-AA container, one or more pieces of identification information out of the 1st identification information and the 2nd identification information, and may further include the Service-level-AA container information element in the PDU session establishment request message.

Next, in a case that the AMF receives the NAS message, the AMF can recognize the request of the UE, and/or details of the information and the like (a message, a container, information) included in the NAS message.

Next, the AMF selects the SMF as a transfer destination of at least a part of the information and the like (a message, a container, information) included in the NAS message received from the UE (S1402). Note that the AMF may select the SMF as a transfer destination, based on the information and the like (a message, a container, information) included in the NAS message, and/or the subscriber information and/or the network capability information and/or the UE policy and/or the operator policy and/or the network status and/or the user registration information and/or the context held in the AMF, or the like.

Next, the AMF transmits at least a part of the information and the like (a message, a container, information) included in the NAS message received from the UE to the selected SMF via the N11 interface, for example (S1404).

Next, in a case that the SMF receives the information and the like (a message, a container, information) transmitted from the AMF, the SMF can recognize the request of the UE, and/or details of the information and the like (a message, a container, information) received from the AMF.

Here, the SMF may perform second condition fulfillment determination. The second condition fulfillment determination may be performed for determining whether or not the network accepts the request from the UE. In a case of determining the second condition fulfillment determination to be true, the SMF may initiate the procedure of (A) of FIG. 7, whereas in a case of determining the second condition fulfillment determination to be false, the SMF may initiate the procedure of (B) of FIG. 7.

Note that the second condition fulfillment determination may be performed by an NF other than the SMF. The NF may be, for example, an NSSF, an NWDAF, a PCF, or an NRF. In a case that the NF other than the SMF performs the second condition fulfillment determination, the SMF may provide the NF with at least a part of information necessary for performing the second condition fulfillment determination, specifically, information received from the UE (S1406). Then, in a case that the NF determines true or false of the second condition fulfillment determination based on the information received from the SMF, the NF may notify the SMF of information including results (in other words, true or false) of the second condition fulfillment determination. The SMF may determine the identification information and/or the control message to be transmitted to the UE, based on the results of the second condition fulfillment determination received from the NF.

Note that the second condition fulfillment determination may be performed based on the information and the like (a message, a container, information) received from the AMF, and/or the subscriber information (subscription information) and/or the network capability information and/or the UE policy and/or the operator policy and/or the network status and/or the user registration information and/or the context held in the SMF, or the like.

For example, in a case that the network allows the request from the UE, the second condition fulfillment determination may be determined as true, whereas in a case that the network does not allow the request from the UE, the second condition fulfillment determination may be determined as false. In a case that a network as a connection destination of the UE and/or an apparatus in the network supports the function requested by the UE, the second condition fulfillment determination may be determined as true, whereas in a case that the network and/or the apparatus does not support the function requested by the UE, the second condition fulfillment determination may be determined as false. In a case that the transmitted and/or received identification information is allowed, the second condition fulfillment determination may be determined as true, whereas in a case that the transmitted and/or received identification information is not allowed, the second condition fulfillment determination may be determined as false.

Note that the condition for determining true or false of the second condition fulfillment determination need not necessarily be limited to the condition described above.

Next, each step of the procedure of (A) of FIG. 7 will be described.

The SMF may select the UPF for a PDU session to be established, and transmit an N4 session establishment request message to the selected UPF via the N4 interface, for example (S1408). In the N4 session establishment request message, at least a part of a PCC rule received from the PCF may be included.

The SMF may determine whether or not to perform authorization for C2 communication during the present procedure, based on the information and the like (a message, a container, information) received from the AMF, and/or the information such as the PCC rule received from the PCF, and/or the subscriber information, and/or the network capability information, and/or the UE policy, and/or the operator policy, and/or the network status, and/or the user registration information, and/or the context held in the SMF, or the like.

In a case that authorization for the C2 communication is performed during the present procedure, the SMF may determine to authorize establishment of the direct C2 communication and/or the C2 communication using the PDU session based on at least one piece of identification information out of the 1st identification information and the 2nd identification information.

Here, the SMF may select one or more UPFs, based on the information and the like (a message, a container, information) received from the AMF, and/or the information such as the PCC rule received from the PCF, and/or the subscriber information, and/or the network capability information, and/or the UE policy, and/or the operator policy, and/or the network status, and/or the user registration information, and/or the context held in the SMF, or the like. In a case that multiple UPFs are selected, the SMF may transmit the N4 session establishment request message to each UPF. Here, it is assumed that the UPF is selected.

Next, in a case that the UPF receives the N4 session establishment request message (S1408), the UPF can recognize details of the information received from the SMF. The UPF may transmit an N4 session establishment response message to the SMF via the N4 interface, for example, based on reception of the N4 session establishment request message (S1410).

Next, in a case that the SMF receives the N4 session establishment response message as a response message for the N4 session establishment request message, the SMF can recognize details of the information received from the UPF.

Next, the SMF transmits a PDU session establishment accept message to the UE, based on reception of the PDU session establishment request message, and/or selection of the UPF, and/or reception of the N4 session establishment response message, and/or the like. The UE receives the PDU session establishment accept message from the SMF (S1418) (S1420) (S1422).

Specifically, the SMF transmits the N1 SM container, and/or N2 SM information, and/or the PDU session ID to the AMF via the N11 interface, for example, based on reception of the PDU session establishment request message, and/or selection of the UPF, and/or reception of the N4 session establishment response message, and/or the like (S1412). Here, the N1 SM container may include the PDU session establishment accept message. In addition, the PDU session ID may be included in the PDU session establishment accept message.

Next, the AMF that has received the N1 SM container, and/or the N2 SM information, and/or the PDU session ID transmits the NAS message to the UE via the first base station apparatus included in the access network (S1414) (S1416). Here, the NAS message is transmitted via the N1 interface, for example. The NAS message may be a downlink NAS transport (DL NAS TRANSPORT) message.

Specifically, in a case that the AMF transmits an N2 PDU session request message to the base station apparatus included in the access network (S1414), the base station apparatus that has received the N2 PDU session request message transmits the NAS message to the UE (S1416). Here, the N2 PDU session request message may include the NAS message and/or the N2 SM information. The NAS message may include the PDU session ID and/or the N1 SM container.

The PDU session establishment accept message may be a response message for the PDU session establishment request. The PDU session establishment accept message may indicate that establishment of the PDU session has been accepted.

Here, the SMF and/or the AMF may transmit the PDU session establishment accept message, and/or the N1 SM container, and/or the PDU session ID, and/or the NAS message, and/or the N2 SM information, and/or the N2 PDU session request message, to thereby indicate that at least a part of the request from the UE by the PDU session establishment request message has been accepted.

Here, the SMF and/or the AMF may transmit the PDU session establishment accept message, and/or the N1 SM container, and/or the NAS message, and/or the N2 SM information, and/or the N2 PDU session request message including at least one or more pieces of identification information out of the 10th to 12th and 15th to 18th identification information.

Note that, the SMF may transmit these pieces of identification information and/or the PDU session establishment accept message, to thereby indicate that the network supports each function, indicate that the request from the UE has been accepted, indicate that the request from the UE is not allowed, or indicate information of a combination of these. In addition, in a case that multiple pieces of identification information are transmitted and/or received, two or more pieces of identification information of these pieces of identification information may be configured as one or multiple pieces of identification information. Note that information indicating support of each function and information indicating a request for use of each function may be transmitted and/or received as the same piece of identification information, or may be transmitted and/or received as different pieces of identification information.

Here, the network may transmit the PDU session establishment accept message, to thereby indicate details of the identification information to the UE.

Note that the network may transmit the PDU session establishment accept message also including identification information other than the 10th to 12th and 15th to 18th identification information. Specifically, the network may include the Service-level-AA container in the PDU session establishment accept message. Alternatively, the network may use the Service-level-AA container to transmit the 10th to 12th and 15th to 18th identification information. Specifically, the network may include, in the Service-level-AA container, one or more pieces of identification information out of the 10th to 12th and 15th to 18th identification information, and may further include the Service-level-AA container in the PDU session establishment accept message. The UE may receive the PDU session establishment accept message including the Service-level-AA container.

Note that the SMF and/or the AMF may determine which piece of identification information is to be included in the PDU session establishment accept message, and/or the N1 SM container, and/or the NAS message, and/or the N2 SM information, and/or the N2 PDU session request message, based on each piece of received identification information, and/or the subscriber information, and/or the network capability information, and/or the UE policy, and/or the operator policy, and/or the network status, and/or the user registration information, and/or the context held in the SMF and/or the AMF, or the like.

Next, in a case that the UE receives the NAS message via the N1 interface, for example (S1416), the UE can recognize that the request from the UE by the PDU session establishment request message has been accepted, and/or details of the information and the like (a message, a container, information) included in the NAS message.

Next, each step of the procedure of (B) of FIG. 7 will be described.

First, based on reception of the PDU session establishment request message, the SMF transmits the N1 SM container and/or the PDU session ID to the AMF via the N11 interface, for example (S1418). Here, the N1 SM container may include a PDU session establishment reject message. In addition, the PDU session ID may be included in the PDU session establishment reject message.

Next, the AMF that has received the N1 SM container and/or the PDU session ID transmits the NAS message to the UE via the base station apparatus included in the access network (S1420) (S1422). Here, the NAS message is transmitted via the N1 interface, for example. The NAS message may be a downlink NAS transport (DL NAS TRANSPORT) message. The NAS message may include the PDU session ID and/or the N1 SM container.

The PDU session establishment reject message may be a response message for the PDU session establishment request. The PDU session establishment reject message may indicate that establishment of the PDU session has been rejected.

Here, the SMF and/or the AMF may transmit the PDU session establishment reject message, and/or the N1 SM container, and/or the PDU session ID, and/or the NAS message, to thereby indicate that the request from the UE on the PDU session establishment request message has been rejected.

Note that the SMF may transmit the PDU session establishment reject message, to thereby indicate that the request from the UE has been rejected, indicate that the request from the UE is not allowed, or indicate information of a combination of these.

Here, the SMF and/or the AMF may transmit the PDU session establishment reject message, and/or the N1 SM container, and/or the NAS message, and/or the N2 SM information, and/or the N2 PDU session request message including at least one or more pieces of identification information out of the 10th to 12th and 15th to 18th identification information.

Note that the SMF and/or the AMF may determine which piece of identification information is to be included in the PDU session establishment reject message, and/or the N1 SM container, and/or the NAS message, and/or the N2 SM information, and/or the N2 PDU session request message, based on each piece of received identification information, and/or the subscriber information, and/or the network capability information, and/or the UE policy, and/or the operator policy, and/or the network status, and/or the user registration information, and/or the context held in the SMF and/or the AMF, or the like.

Next, in a case that the UE receives the NAS message via the N1 interface, for example (S1422), the UE can recognize that the request from the UE by the PDU session establishment request message has been rejected, and/or details of the information and the like (a message, a container, information) included in the NAS message.

Further, in the case of receiving one or more pieces of identification information out of the 10th to 12th and 15th to 18th identification information, the UE may recognize the content indicated by the received identification information. Further, in the case of receiving one or more pieces of identification information out of the 10th to 12th and 15th to 18th identification information, the UE may recognize that the content indicated by the identification information included in the NAS message or the PDU session establishment accept message or the PDU session establishment reject message has been allowed.

Here, in the case of receiving the 10th identification information, the UE may initiate an establishment procedure for a direct C2 communication. In other words, in the case of receiving the 10th identification information, the UE may recognize that a direct C2 communication has been authenticated and/or authorized, and initiate the establishment procedure for the direct C2 communication.

In the case of receiving the 10th identification information, the UE may not need to initiate an establishment procedure for a direct C2 communication. In other words, in the case of receiving the 10th identification information, the UE may recognize that a direct C2 communication has not been authenticated and/or authorized and may not need to initiate the establishment procedure for the direct C2 communication.

In the case of receiving the 11th identification information, the UE may initiate an establishment procedure for a direct C2 communication and/or a PDU session establishment procedure for a C2 communication. In other words, in the case of receiving the 11th identification information, the UE may recognize that a direct C2 communication and/or a C2 communication using a PDU session have been authenticated and/or authorized, and initiate the establishment procedure for the direct C2 communication and/or the PDU session establishment procedure for the C2 communication.

In the case of receiving the 11th identification information, the UE may not need to initiate an establishment procedure for a direct C2 communication and/or a PDU session establishment procedure for a C2 communication. In other words, in the case of receiving the 11th identification information, the UE may recognize that a direct C2 communication and/or a C2 communication using a PDU session have not been authenticated and/or authorized and may not need to initiate the establishment procedure for the direct C2 communication and/or the PDU session establishment procedure for the C2 communication.

In the case of receiving the 12th identification information, the UE may configure the identification information of the UAV or UAV-C. In the case of receiving the 12th identification information, the UE may delete the stored identification information of the UAV or UAV-C and store the received identification information of the UAV or UAV-C.

In the case of receiving the 15th identification information, the UE may initiate a release procedure for a direct C2 communication. In other words, in the case of receiving the 15th identification information, the UE may recognize that the authentication and/or authorization for the direct C2 communication has been revoked and initiate the release procedure for the direct C2 communication.

In the case of receiving the 16th identification information, the UE may initiate a release procedure for a direct C2 communication and/or a PDU session release procedure for a C2 communication. In other words, in the case of receiving the 16th identification information, the UE may recognize that authentication and/or authorization for the direct C2 communication and/or C2 communication using the PDU session have been revoked and initiate the release procedure for the direct C2 communication and/or the PDU session release procedure for the C2 communication.

In the case of receiving the 18th identification information, the UE may configure the timer value indicated by the 18th identification information for a first timer. In the case of receiving the 18th identification information, the UE may start the first timer with the timer value indicated by the 18th identification information. Further, in the case that the first timer expires, the UE may initiate a release procedure of a communication path for a direct C2 communication. Before the first timer expires, the UE may initiate a release procedure of a communication path for a direct C2 communication.

Here, the first timer may be a timer for managing a grace time until a PDU session for a direct C2 communication and/or C2 communication is released. The first timer may be a timer for managing a time at which a PDU session for a direct C2 communication and/or C2 communication is released. The first timer may be a timer for managing a timer value indicated by the 18th identification information.

Note that the behavior of the UE described above may be performed after receiving the PDU session accept message or the PDU session reject message. The behavior of the UE described above may be performed after receiving one or more pieces of identification information out of the 10th to 12th and 15th to 18th identification information.

The UE may receive the NAS message, the PDU session establishment accept message, or the PDU session establishment reject message, to thereby recognize details of the identification information.

Each apparatus may complete the present procedure, based on transmission and/or reception of the PDU session establishment accept message. Each apparatus may establish a PDU session based on completion of the present procedure. In this case, each apparatus may transition to a state capable of communicating with the DN using the established PDU session.

Based on transmission and/or reception of the PDU session establishment accept message or the PDU session establishment reject message, each apparatus may complete the present procedure. In this case, each apparatus cannot establish a PDU session, and thus cannot communicate with the DN in a case that there is no PDU session that has been already established.

Note that each processing step illustrated above that the UE performs based on reception of each piece of identification information may be performed during the present procedure or after the present procedure is completed or may be performed based on completion of the present procedure after the present procedure is completed.

### 3.2.3. Overview of Network-Initiated Session Management Procedure

Next, an overview of the network-initiated session management procedure will be described. Hereinafter, the network-initiated session management procedure will also be referred to as a present procedure. The present procedure is a procedure for session management performed on an established PDU session on a network-initiative basis. The network-initiated session management procedure may be an SM procedure.

The PDU session in the present procedure may be a PDU session for C2 communication or may be a PDU session for direct C2 communication. The PDU session in the present procedure may be a PDU session for the UAS service.

Note that the present procedure may be a network-initiated PDU session modification procedure and/or a network-initiated PDU session release procedure, or the like, or a network-initiated session management procedure that is not limited thereto may be performed. Note that each apparatus may transmit and/or receive a PDU session modification message in the network-initiated PDU session modification procedure or may transmit and/or receive a PDU session release message in the network-initiated PDU session release procedure.

In a case that the present procedure is a network-initiated PDU session modification procedure, a session management request message in the present procedure may be a PDU session modification command (PDU SESSION MODIFICATION COMMAND) message. In a case that the present procedure is a network-initiated PDU session release procedure, a session management request message in the present procedure may be a PDU session release command (PDU SESSION RELEASE COMMAND) message.

In a case that the present procedure is a network-initiated PDU session modification procedure, a session management complete message in the present procedure may be a PDU session modification complete (PDU SESSION MODIFICATION COMPLETE) message. In a case that the present procedure is a network-initiated PDU session release procedure, a session management complete message in the present procedure may be a PDU session release complete (PDU SESSION RELEASE COMPLETE) message.

### 3.2.3.1. Network-Initiated Session Management Procedure Example

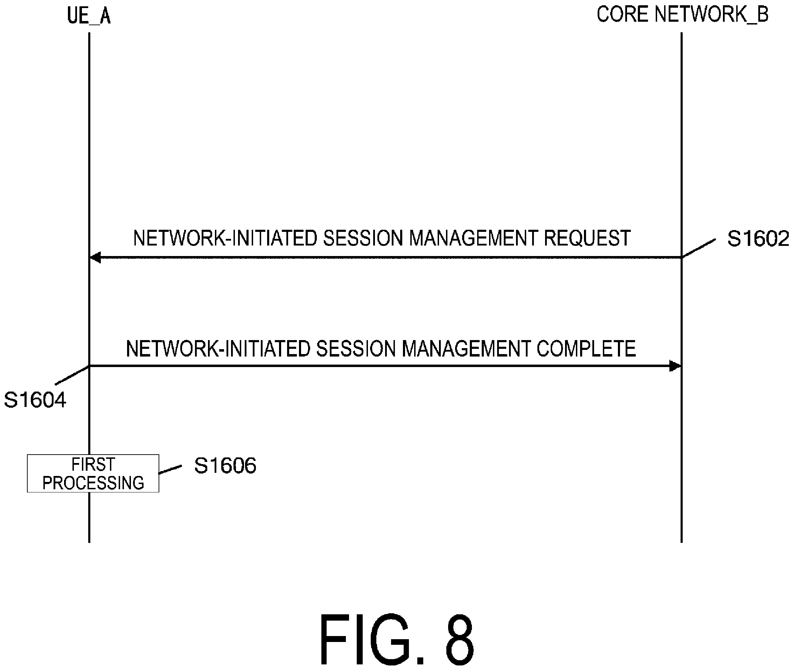

Next, an example of the network-initiated session management procedure will be described with reference to FIG. 8. Hereinafter, the present procedure refers to the network-initiated session management procedure. Each step of the present procedure will be described.

Based on completion of the registration procedure and/or the PDU session establishment procedure, the UE and each apparatus in the core network_B 190 initiate a network-initiated session management procedure at any timing.

To be specific, the apparatus in the core network _B190 may initiate the present procedure based on reception of a PDU session modification request message from the UE, or may initiate the present procedure based on reception of a PDU session release request message from the UE. Note that the present procedure may be a network-initiated PDU session modification procedure in a case that the present procedure is initiated based on the receipt of the PDU session modification request message. Further, the present procedure may be a network-initiated PDU session release procedure in a case that the present procedure is initiated based on the receipt of the PDU session release request message.

Furthermore, the apparatus in the core network_B190 may initiate the present procedure based on a request from an apparatus in the DN or another apparatus in the core network.

Here, the apparatus in the core network_B 190 that initiates the present procedure may be the SMF and/or the AMF, and the UE may transmit and/or receive messages in the present procedure via the AMF and/or over the access network_B. Further, the apparatus in the DN may be an application function (AF) in the DN.

The apparatus in the core network_B 190 transmits a network-initiated session management request message to the UE (S1602) to initiate network-initiated session management. Further, the UE receives the network-initiated session management request message from the apparatus in the core network_B 190.

Here, the apparatus in the core network_B 190 may include at least one piece of the 10th to 12th and 15th to 18th identification information in the network-initiated session management request message or may indicate the request from the core network_B 190 by including the identification information. Further, the apparatus in the core network_B 190 may include the PDU session ID in the network-initiated session management request message, or may request to modify the PDU session identified by the PDU session ID by including the PDU session ID.

Note that the PDU session ID included in the PDU session modification request message may be a PDU session ID of the established PDU session. Further, in a case that the present procedure is performed based on a UE-initiated session management procedure, the PDU session ID included in the PDU session modification request message may be the same as the PDU session ID included in the PDU session modification request message or the PDU session release request message.

Here, in the case of receiving the 10th identification information, the UE may initiate an establishment procedure for a direct C2 communication. In other words, in the case of receiving the 10th identification information, the UE may recognize that a direct C2 communication has been authenticated and/or authorized, and initiate the establishment procedure for the direct C2 communication.

In the case of receiving the 10th identification information, the UE may not need to initiate an establishment procedure for a direct C2 communication. In other words, in the case of receiving the 10th identification information, the UE may recognize that a direct C2 communication has not been authenticated and/or authorized and may not need to initiate the establishment procedure for the direct C2 communication.

In the case of receiving the 11th identification information, the UE may initiate an establishment procedure for a direct C2 communication and/or a PDU session establishment procedure for a C2 communication. In other words, in the case of receiving the 11th identification information, the UE may recognize that a direct C2 communication and/or a C2 communication using a PDU session have been authenticated and/or authorized, and initiate the establishment procedure for the direct C2 communication and/or the PDU session establishment procedure for the C2 communication.

In the case of receiving the 11th identification information, the UE may not need to initiate an establishment procedure for a direct C2 communication and/or a PDU session establishment procedure for a C2 communication. In other words, in the case of receiving the 11th identification information, the UE may recognize that a direct C2 communication and/or a C2 communication using a PDU session have not been authenticated and/or authorized and may not need to initiate the establishment procedure for the direct C2 communication and/or the PDU session establishment procedure for the C2 communication.

In the case of receiving the 12th identification information, the UE may configure the identification information of the UAV or UAV-C. In the case of receiving the 12th identification information, the UE may delete the stored identification information of the UAV or UAV-C and store the received identification information of the UAV or UAV-C.

In the case of receiving the 15th identification information, the UE may initiate a release procedure for a direct C2 communication. In other words, in the case of receiving the 15th identification information, the UE may recognize that the authentication and/or authorization for the direct C2 communication has been revoked and initiate the release procedure for the direct C2 communication.

In the case of receiving the 16th identification information, the UE may initiate a release procedure for a direct C2 communication and/or a PDU session release procedure for a C2 communication. In other words, in the case of receiving the 16th identification information, the UE may recognize that authentication and/or authorization for the direct C2 communication and/or C2 communication using the PDU session have been revoked and initiate the release procedure for the direct C2 communication and/or the PDU session release procedure for the C2 communication.

In the case of receiving the 18th identification information, the UE may configure the timer value indicated by the 18th identification information for a first timer. In the case of receiving the 18th identification information, the UE may start the first timer with the timer value indicated by the 18th identification information. Further, in the case that the first timer expires, the UE may initiate a release procedure of a communication path for a direct C2 communication. Before the first timer expires, the UE may initiate a release procedure of a communication path for a direct C2 communication.

Here, the first timer may be a timer for managing a grace time until a PDU session for a direct C2 communication and/or C2 communication is released. The first timer may be a timer for managing a time at which a PDU session for a direct C2 communication and/or C2 communication is released. The first timer may be a timer for managing a timer value indicated by the 18th identification information.

Note that the behavior of the UE described above may be performed after receiving the PDU session modification command message or the PDU session release command message. The behavior of the UE described above may be performed after receiving one or more pieces of identification information out of the 10th to 12th and 15th to 18th identification information.

Next, the UE that has received the network-initiated session management request message transmits a network-initiated session management complete message (S1604). Moreover, the UE may perform first processing (S1606) and complete the present procedure based on at least one piece of the 10th to 12th and 15th to 18th identification information received from the core network_B 190. The UE may also perform the first processing based on the completion of the present procedure.

Here, the UE may include the PDU session ID in the network-initiated session management complete message. Note that the PDU session ID included in the network-initiated session management complete message may be the same as the PDU session ID included in the network-initiated session management request message.

Hereinafter, an example of the first processing will be described.

The first processing may be processing in which the UE recognizes the events indicated by the core network _B190, or may be processing in which the UE recognizes a request from the core network_B190. Moreover, the first processing may be processing in which the UE stores the received identification information as a context or may be processing in which the UE transfers the received identification information to the upper layer and/or the lower layer.

The UE may perform, as the first processing, the behavior for the case of receiving each piece of identification information described above.

Furthermore, each apparatus may perform processing based on identification information transmitted and/or received in the present procedure, based on completion of the present procedure. In other words, the UE may perform the first processing based on completion of the present procedure or may complete the present procedure after completion of the first processing.

Further, each apparatus completes the network-initiated session management procedure based on completion of the above-described processing, and/or the transmission and/or reception of the network-initiated session management request message, and/or network-initiated session management complete message.

Note that each apparatus may modify or release the existing PDU session based on the completion of the network-initiated session management procedure. In other words, each apparatus may modify the existing PDU session based on the completion of the PDU session modification procedure. In other words similarly, each apparatus may release the existing PDU session based on the completion of the PDU session release procedure.

### 3.2.4. Overview of UE-initiated Session Management Procedure

Next, an overview of the UE-initiated session management procedure will be described. Hereinafter, the UE-initiated session management procedure will also be referred to as a present procedure. The present procedure is a procedure for session management performed on a UE initiative based on the established PDU session. The UE-initiated session management procedure may be an SM procedure.

The PDU session in the present procedure may be a PDU session for C2 communication or may be a PDU session for direct C2 communication. The PDU session in the present procedure may be a PDU session for the UAS service.

Note that the present procedure may be a UE-initiated PDU session modification procedure and/or a UE-initiated PDU session release procedure, or the like, or a UE-initiated session management procedure that is not limited thereto may be performed. Note that each apparatus may transmit and/or receive a PDU session modification request message and/or a PDU session modification command message and/or a PDU session modification complete message and/or a PDU session modification reject message in the UE-initiated PDU session modification procedure. Each apparatus may transmit and/or receive a PDU session release request message and/or a PDU session release command message and/or a PDU session release complete message and/or a PDU session release reject message in the UE-initiated PDU session release procedure.

Further, each apparatus completes the UE-initiated session management procedure based on completion of the above-described processing, and/or the transmission and/or reception of a UE-initiated session management request message and/or UE-initiated session management complete message.

### 3.2.4.1. UE-Initiated PDU Session Modification Procedure Example

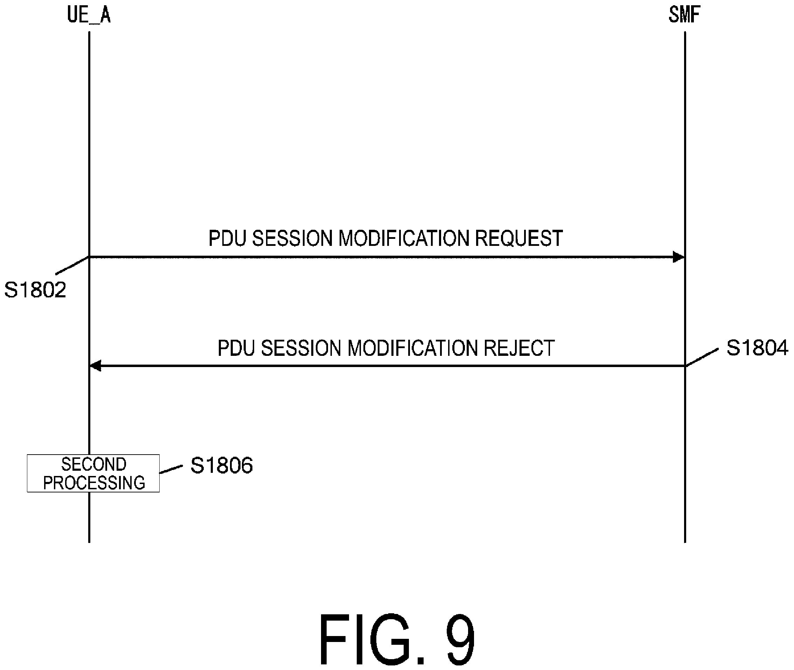

Next, each step of the present procedure will be described with reference to FIG. 9. Hereinafter, the present procedure refers to a UE-initiated PDU session modification procedure.

Note that based on the completion of the registration procedure and/or the PDU session establishment procedure, the UE can initiate a UE-initiated PDU session modification procedure at any timing. In other words, the UE may initiate the UE-initiated PDU session modification procedure for the established PDU session at any timing. Further in other words, the UE may initiate the UE-initiated PDU session modification procedure using the same PDU session ID as the established PDU session at any timing.

First, the UE transmits a PDU session modification request message to the SMF (S1802) to initiate the UE-initiated PDU session modification procedure. Here, the UE may include the PDU session ID in the PDU session modification request message, or may request to modify the PDU session identified by the PDU session ID by including the PDU session ID.

Here, the UE may include, in the PDU session modification request message, at least one piece of the 1st and 2nd identification information.

Note that the PDU session ID included in the PDU session modification request message may be a PDU session ID of the established PDU session.

Then, the SMF receives the PDU session modification request message transmitted by the UE. In a case of accepting the request from the UE, the SMF initiates a network-initiated PDU session modification procedure. Conversely, in a case of rejecting the request from the UE, the SMF transmits a PDU session modification reject message to the UE. Hereinafter, the case that the SMF rejects the request from the UE will be described.

The SMF transmits a PDU session modification reject message to the UE based on the acceptance of the PDU session modification request message (S1804).

Here, the SMF may include, in the PDU session modification reject message, at least one piece of the 10th to 12th and 15th to 18th identification information.

Here, the PDU session ID included in the PDU session modification reject message may be the same as the PDU session ID included in the PDU session modification request message. In other words, the PDU session ID included in the PDU session modification reject message may be the same as the PDU session ID provided by the UE during the present procedure.

The UE may receive the PDU session modification reject message. Further, each apparatus completes the present procedure, based on the transmission and/or reception of the PDU session modification reject message, and/or the completion of the network-initiated PDU session modification procedure.

Here, the UE may recognize that the request from the UE has been rejected based on the reception of the PDU session modification reject message. Further, the UE may perform second processing based on the reception of the PDU session modification reject message (S1806). Note that the second processing may be performed based on completion of the present procedure.

Here, the second processing may be processing in which the UE recognizes the events indicated by the SMF. Moreover, the second processing may be processing in which the UE stores the received identification information as a context or may be processing in which the UE transfers the received identification information to the upper layer and/or the lower layer. Moreover, the second processing may be processing in which the UE recognizes that the request in the present procedure has been rejected.

The PDU session modification procedure and/or the PDU session release procedure for the same PDU session may be a PDU session modification procedure and/or a PDU session release procedure using the same PDU session ID.

Further, each apparatus completes the UE-initiated PDU session modification procedure based on completion of the above-described processing, and/or the transmission and/or reception of the UE-initiated PDU session modification reject message.

### 3.2.4.2. UE-Initiated PDU Session Release Procedure Example

Next, each step of the present procedure will be described. Hereinafter, the present procedure refers to a UE-initiated PDU session release procedure.

The UE-initiated PDU session release procedure may be a procedure similar to the PDU session modification procedure described above.

Specifically, in a case that the present procedure is a UE-initiated PDU session release procedure, the PDU session modification request message described above may be interpreted as the PDU session release request message. Further, in the case that the present procedure is a UE-initiated PDU session release procedure, the PDU session modification request message described above may be interpreted as the PDU session release request message, and the PDU session modification reject message may be interpreted as the PDU session release reject message. The behavior of modifying the PDU session may be interpreted as the behavior of releasing the PDU session.

Further, in the case that the present procedure is a UE-initiated PDU session release procedure, the behavior of the SMF performed based on the reception of the PDU session release request message may be similar to the behavior of the SMF performed based on the reception of the PDU session modification request message described above. Further, in the case that the present procedure is a UE-initiated PDU session release procedure, the behavior of the UE performed based on the reception of the PDU session release reject message may be similar to the behavior of the UE performed based on the reception of the PDU session modification reject message described above.

Further, in the case that the present procedure is a UE-initiated PDU session release procedure, the SMF may initiate the network-initiated PDU session release procedure or may transmit a PDU session release reject message to the UE based on the reception of the PDU session release request message.

The UE may transmit, to the network, the PDU session release request message including at least one piece of the 1st and 2nd identification information.

Further, each apparatus completes the UE-initiated PDU session release procedure based on completion of the above-described processing, and/or the transmission and/or reception of the UE-initiated PDU session release reject message.

### 3.2.5. Procedure for Establishing Direct C2 Communication

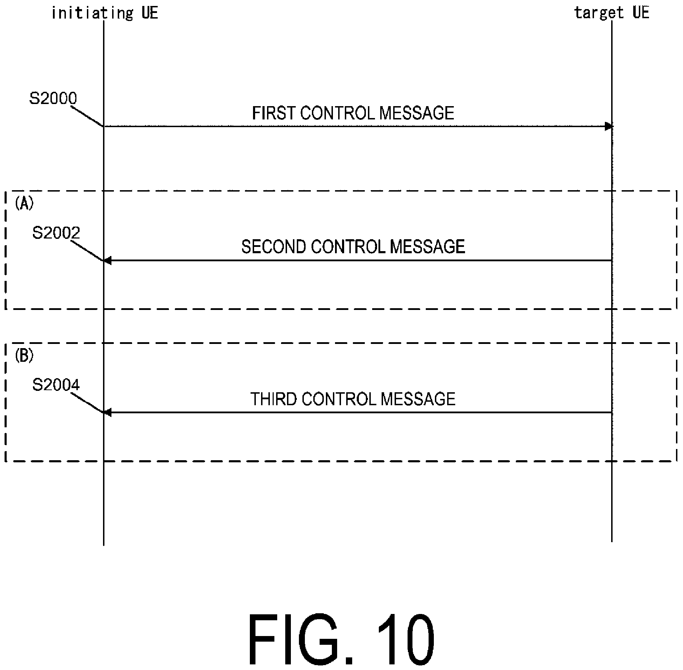

Next, the behavior of each apparatus in a case that the UE performs a procedure for establishing the direct C2 communication will be described with reference to FIG. 10. Hereinafter, the procedure for establishing the direct C2 communication may be referred to as the present procedure. The procedure for establishing the direct C2 communication may be referred to as an establishment procedure for direct C2 communication.

Note that the present procedure may be performed after performing a registration procedure and/or a PDU session establishment procedure and/or a network-initiated session management procedure and/or a UE-initiated session management procedure one or more times. The present procedure may be performed during a registration procedure or a PDU session establishment procedure or a network-initiated session management procedure or a UE-initiated session management procedure.

The present procedure may be performed in a case that the network has authenticated and/or authorized, for the UE, the direct C2 communication in a registration procedure and/or a PDU session establishment procedure and/or a network-initiated session management procedure and/or a UE-initiated session management procedure. In other words, in the case of receiving the 10th to 12th and 15th to 18th identification information, the UE may initiate the present procedure. The UE may initiate the present procedure regardless of the authorization, by the network, for the direct C2 communication.

Note that in the present procedure, the UE may act as an initiating UE or as a target UE.

Note that in the present procedure, the initiating UE and the target UE may transmit and /or receive each control message on the PC5.

First, the initiating UE transmits a first control message to the target UE (S2000) to initiate the present procedure.

Here, the first control message may be a message for requesting establishment of the direct C2 communication. The first control message may be a ProSe direct link establishment request message. The first control message may be a direct communication request message.

Here, the initiating UE may include, in the first control message, one or more pieces of identification information out of the 3rd identification information to the 5th identification information, and transmit the first control message. The initiating UE may transmit one or more pieces of identification information out of the 3rd to 5th identification information together with the first control message.

Note that the initiating UE may transmit these pieces of identification information, to thereby indicate that the initiating UE supports each function, or indicate the request from the initiating UE. In addition, in a case that multiple pieces of identification information are transmitted and/or received, two or more pieces of identification information of these pieces of identification information may be configured as one or multiple pieces of identification information. Note that information indicating support for each function and information indicating a request to use each function may be transmitted and/or received with the same piece of identification information or may be transmitted and/or received as different pieces of identification information.

Here, by transmitting the first control message, the initiating UE may indicate the content of each piece of the identification information to the network. In addition, by transmitting one or more pieces of identification information out of the 3rd to 5th identification information, the initiating UE may indicate the content of each piece of the identification information to the network.

Note that the UE may select or determine whether to include, in the first control message, one or more pieces of identification information out of the 3rd to 5th identification information based on subscriber information and/or a network status and/or user registration information and/or a context held in the UE, or the like.

Note that the UE may transmit the first control message also including identification information other than the 3rd to 5th identification information.

By transmitting the first control message, the initiating UE may request establishment of the direct C2 communication. By transmitting one or more pieces of identification information out of the 3rd to 5th identification information, the initiating UE may request establishment of the direct C2 communication.

Next, the target UE receives the first control message from the initiating UE.

In a case of receiving the first control message, the target UE may recognize the content requested by the initiating UE, and/or the content of information and the like (a message, a container, identification information information) included in the first control message, or the like.

Here, the target UEF may perform a third condition fulfillment determination. The third condition fulfillment determination may be used for the target UE to determine whether to accept the request from the initiating UE. In a case of determining the third condition fulfillment determination to be true, the target UE may initiate the procedure of (A) of FIG. 10, whereas in a case of determining the third condition fulfillment determination to be false, the target UE may initiate the procedure of (B) of FIG. 10.

Note that the third condition fulfillment determination may be performed based on the information and the like (a message, a container, information) received from the initiating UE, and/or the subscriber information (subscription information), and/or the network capability information, and/or the UE policy, and/or the operator policy, and/or the network status, and/or the user registration information, and/or the context stored by the target UE, and/or the like.

For example, in a case that the target UE allows the request from the initiating UE, the third condition fulfillment determination may be determined to be true, whereas in a case that the target UE does not allow the request from the initiating UE, the third condition fulfillment determination may be determined to be false. In a case that the target UE as a connection destination of the initiating UE and/or an apparatus in the target UE supports the function requested by the initiating UE, the third condition fulfillment determination may be determined to be true, whereas in a case that the target UE and/or the apparatus does not support the function requested by the initiating UE, the third condition fulfillment determination may be determined to be false. In a case that the transmitted and/or received identification information is allowed, the third condition fulfillment determination may be determined to be true, whereas in a case that the transmitted and/or received identification information is not allowed, the third condition fulfillment determination may be determined to be false.

Note that the condition for determining true or false of the third condition fulfillment determination need not necessarily be limited to the condition described above.

Next, each step of the procedure of (A) of FIG. 10 will be described.

The target UE transmits a second control message to the initiating UE based on reception of the first control message (S2002).

Here, the second control message may be a message for accepting establishment of the direct C2 communication. The second control message may be a ProSe direct link establishment accept message. The second control message may be a direct communication accept message.

The second control message may be a response message to the first control message. The second control message may indicate that the first control message has been accepted.

Here, the target UE may include, in the second control message, one or more pieces of identification information out of the 13th identification information and the 14th identification information, and transmit the second control message.

Here, by transmitting the second control message, the target UE may indicate that at least a part of the request from the initiating UE by the first control message has been accepted. In addition, by transmitting one or more pieces of identification information out of the 13th and 14th identification information, the target UE may indicate that at least a part of the request from the initiating UE by the first control message has been accepted.

Note that, by transmitting these pieces of identification information and/or the second control message, the target UE may indicate that the target UE supports the functions, may indicate that the request from the initiating UE has been accepted, may indicate that the request from the initiating UE has not been allowed, or may indicate information obtained by combining the above-described pieces of information. In addition, in a case that multiple pieces of identification information are transmitted and/or received, two or more pieces of identification information of these pieces of identification information may be configured as one or multiple pieces of identification information. Note that information indicating support of each function and information indicating a request for use of each function may be transmitted and/or received as the same piece of identification information, or may be transmitted and/or received as different pieces of identification information.

Note that the target UE may determine which identification information is to be included in the second control message based on each piece of received identification information, and/or the subscriber information, and/or the network capability information, and/or the UE policy, and/or the operator policy, and/or the network status, and/or the user registration information, and/or the context held by the target UE, and/or the like.

Then, the initiating UE receives the second control message from the target UE.

In a case of receiving the second control message, the initiating UE can recognize that the request from the UE by the first control message has been accepted, and/or the content of the information and the like (a message, a container, identification information) included in the second control message.

Next, each step of the procedure of (B) of FIG. 10 will be described.

First, the target UE transmits a third control message to the initiating UE, based on reception of the first control message (S2004).

Here, the third control message may be a message for rejecting establishment of the direct C2 communication. The third control message may be a ProSe direct link establishment reject message. The third control message may be a direct communication reject message.

The third control message may be a response message to the first control message. The third control message may indicate that establishment of the direct C2 communication has been rejected.

Here, by transmitting the third control message, the target UE may indicate that the request from the UE by the first control message has been rejected.

Note that, by transmitting the third control message, the target UE may indicate that the request from the initiating UE has been rejected, may indicate that the request from the initiating UE has not been allowed, or may indicate information obtained by combining the above-described pieces of information.

Here, the target UE may include, in the third control message, one or more pieces of identification information out of the 13th identification information and the 14th identification information, and transmit the third control message.

Note that the target UE may determine which identification information is to be included in the third control message based on each piece of received identification information, and/or the subscriber information, and/or the network capability information, and/or the UE policy, and/or the operator policy, and/or the network status, and/or the user registration information, and/or the context held by the target UE, and/or the like.

Then, the initiating UE receives the third control message (S2004). In a case of receiving the third control message, the initiating UE can recognize that the request from the UE by the first control message has been rejected, and/or the content of the information and the like (a message, a container, identification information) included in the third control message.

Each apparatus may complete the present procedure based on transmission and/or reception of the second control message. Each apparatus may establish a communication path for direct C2 communication based on the completion of the present procedure. At this time, each apparatus may transition to a state in which communication can be performed between the initiating UE and the target UE using established the direct C2 communication.

Alternatively, each apparatus may complete the present procedure based on transmission and/or reception of the third control message. At this time, since each apparatus cannot establish the direct C2 communication, communication cannot be performed between the initiating UE and the target UE in a case that no direct C2 communication has been established.

Each processing step shown above that the initiating UE performs based on reception of each piece of identification information may be performed during the present procedure or after the present procedure is completed or may be performed based on completion of the present procedure after the present procedure is completed.

After establishing the direct C2 communication based on completion of the present procedure, the initiating UE and the target UE may initiate exchanging information using the direct C2 communication.

### 3.2.6. Procedure for Releasing Direct C2 Communication

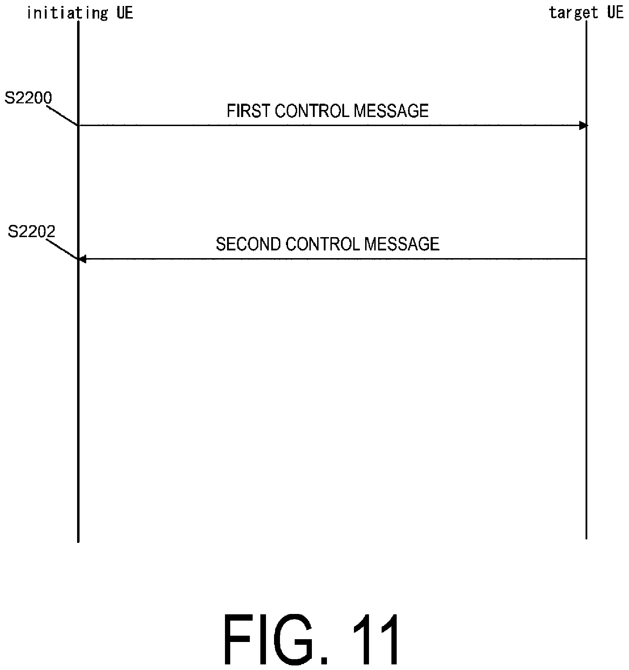

Next, the behavior of each apparatus in a case that the UE performs a procedure for releasing the direct C2 communication will be described with reference to FIG. 11. Hereinafter, the procedure for releasing the direct C2 communication may be referred to as the present procedure. The procedure for releasing the direct C2 communication may be referred to as a release procedure for direct C2 communication.

Note that the present procedure may be performed after performing a registration procedure and/or a PDU session establishment procedure and/or a network-initiated session management procedure and/or a UE-initiated session management procedure one or more times. The present procedure may be performed during a registration procedure or a PDU session establishment procedure or a network-initiated session management procedure or a UE-initiated session management procedure.

The present procedure may be performed in a case that the authentication and/or authorization for the direct C2 communication is revoked by the network for the UE in a registration procedure and/or a PDU session establishment procedure and/or a network-initiated session management procedure and/or a UE-initiated session management procedure. In other words, in the case of receiving the 10th to 12th and 15th to 18th identification information, the UE may initiate the present procedure. The UE may initiate the present procedure regardless of the revocation, by the network, of the direct C2 communication.

Note that in the present procedure, the UE may act as an initiating UE or as a target UE.

The procedure may be performed in a case that the UE receives from lower layers an indication of radio link failure or an indication of PC5-RRC connection release.

The present procedure may be performed in a case that the initiating UE receives a request for releasing a 5G ProSe direct link from the upper layer. The present procedure may be performed in a case that the initiating UE receives a request for releasing the communication path for direct C2 communication from the upper layer.

The present procedure may be performed in a case that the target UE is in a non-responsive state.

The present procedure may be performed in a case that the initiating UE reaches the maximum number of established 5G ProSe direct links and/or in a case that the initiating UE needs to establish a new 5G ProSe direct link. The present procedure may be performed in a case that the initiating UE reaches the maximum number of established communication paths for direct C2 communication and/or in the case that the initiating UE needs to establish a new 5G ProSe direct link.

The present procedure may be performed in a case that the initiating UE operates as a 5G ProSe layer-3 UE-to-network relay UE and/or in a case that the PDU session is released by the initiating UE or the network.

The present procedure may be performed in a case that the initiating UE operates as a 5G ProSe layer-2 remote UE or a 5G ProSe layer-3 remote UE and/or in a case that the initiating UE is in the 5GMM-IDLE mode.

The present procedure may be performed in a case that the initiating UE operates as a 5G ProSe layer-2 remote UE or a 5G ProSe layer-3 remote UE or a 5G ProSe layer-2 UE-to-network relay UE and/or in a case that service authorization of the initiating UE is revoked after receiving the configuration parameters.

The present procedure may be performed in the case that the initiating UE operates as a 5G ProSe layer-3 UE-to-network relay UE and/or in the case that service authorization of the initiating UE is revoked after receiving the configuration parameters.

Note that the 5G ProSe layer-2 UE-to-network relay UE may be a UE capable of using 5G ProSe or direct C2 communication that provides a function of supporting connectivity to the network for a 5G ProSe layer-2 UE-to-network relay UE via the layer-2 protocol.

The 5G ProSe layer-3 UE-to-network relay UE may be a UE capable of using 5G ProSe or direct C2 communication that provides a function of supporting connectivity to the network for a 5G ProSe layer-3 UE-to-network relay UE via the layer-3 protocol.

The 5G ProSe layer-2 remote UE may be a UE capable of using 5G ProSe or direct C2 communication to communicate with the DN via the 5G ProSe layer-2 UE-to-network relay UE.

The 5G ProSe layer-3 remote UE may be a UE capable of using 5G ProSe or direct C2 communication to communicate with the DN via the 5G ProSe layer-3 UE-to-network relay UE.

Note that in the present procedure, the initiating UE and the target UE may transmit and /or receive each control message on the PC5.

First, the initiating UE transmits the first control message to the target UE (S2200) to initiate the present procedure.

Here, the first control message may be a message for requesting release of the direct C2 communication. The first control message may be a ProSe direct link release request message.

Here, the initiating UE may transmit the first control message including the 6th identification information. The initiating UE may transmit the 6th identification information together with the first control message.

Here, by transmitting the first control message, the initiating UE may indicate the content of the identification information to the network. By transmitting the 6th identification information, the initiating UE may indicate the content of the identification information to the network.

Note that the UE may select or determine whether to include the 6th identification information in the first control message based on subscriber information and/or a network status and/or user registration information and/or a context held in the UE, or the like.

Note that the UE may transmit the first control message also including identification information other than the 6th identification information.

By transmitting the first control message, the initiating UE may request release of the direct C2 communication with the target UE. By transmitting the 6th identification information, the initiating UE may request release of the direct C2 communication with the target UE.

Next, the target UE receives the first control message from the initiating UE.

In a case of receiving the first control message, the target UE may recognize the content requested by the initiating UE, and/or the content of information and the like (a message, a container, identification information information) included in the first control message, or the like.

Next, the target UE transmits the second control message to the initiating UE based on reception of the first control message (S2202).

Here, the second control message may be a message for accepting release of the direct C2 communication. The second control message may be a ProSe direct link release accept message.

The second control message may be a response message to the first control message. The second control message may indicate that the first control message has been accepted.

Here, by transmitting the second control message, the target UE may indicate that at least a part of the request from the initiating UE by the first control message has been accepted.

Note that, by transmitting the second control message, the target UE may indicate that the target UE supports the functions, may indicate that the request from the initiating UE has been accepted, may indicate that the request from the initiating UE has not been allowed, or may indicate information obtained by combining the above-described pieces of information.

Then, the initiating UE receives the second control message from the target UE.

In a case of receiving the second control message, the initiating UE can recognize that the request from the UE by the first control message has been accepted, and/or the content of the information and the like (a message, a container, identification information) included in the second control message.

Each apparatus may complete the present procedure based on transmission and/or reception of the second control message. Each apparatus may release the communication path for direct C2 communication based on the completion of the present procedure. At this time, each apparatus may transition to a state in which communication cannot be performed between the initiating UE and the target UE.

### 3.2.7. UUAA

Next, an outline of a UUAA (USS UAV Authorization/Authentication) procedure will be described. Hereinafter, the UUAA procedure may be referred to as the UUAA or the present procedure.

The present procedure is a procedure for authentication and/or authorization of the UE by the USS. Note that Authorization for the C2 communication (Authorization for C2) may be performed during the UUAA procedure.

Note that the present procedure may be initiated by the network or by the UE.

The UUAA may be a UUAA-MM procedure performed at the time of registration with the 5GS. The UUAA may also be a UUAA-SM procedure performed during PDU session establishment. The UUAA may be an MM procedure or an SM procedure. The procedure used in the UUAA may be the MM procedure or the SM procedure.

In a case that the UUAA-MM is not performed, the UUAA-SM may be performed.

The PDU session for a UAS service may be established only after the UAV is authenticated and authorized by the USS. This behavior may be performed during the UUAA-MM or during the UUAA-SM.

Note that a success in the UUAA may be read as authentication and authorization of the UAV having been allowed. A failure in the UUAA may be read as authentication and authorization of the UAV not being allowed.

The fact that authentication and authorization of the UAV have been allowed may be read as the UAV having been authenticated and authorized. The fact that the authentication and authorization of the UAV have not been allowed may be read as the UAV having not been authenticated and authorized.

The fact that authentication and authorization of the UAV have succeeded may be read as the UAV having been authenticated and authorized. The fact that authentication and authorization of the UAV have failed may be read as the UAV having not been authenticated and authorized.

The fact that authentication and authorization of the USS have been allowed may be read as the UAV having been authenticated and authorized. The fact that authentication and authorization of the USS have not been allowed may be read as the UAV having not been authenticated and authorized.

### 3.2.7.1. UUAA-MM

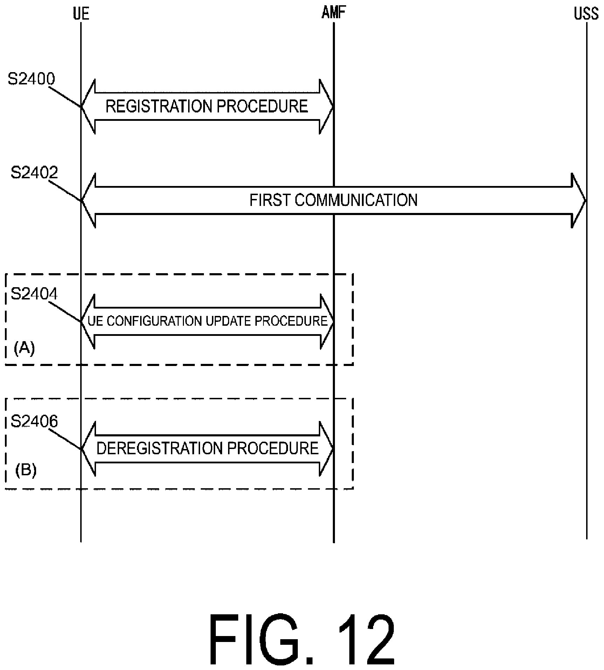

Next, the UUAA-MM procedure will be described by using FIG. 12. The UUAA-MM procedure will be hereinafter also referred to as UUAA-MM or the present procedure. The present procedure may be a procedure performed at the time of registration with the 5GS.

The UUAA-MM procedure may be performed during or after the procedure of registration with the 5GS. In other words, the first communication during the UUAA-MM procedure described below and the registration procedure described above may be collectively referred to as the registration procedure, or the first communication during the UUAA-MM procedure described below may be a procedure independent of the registration procedure described above.

UUAA-MM may be performed in a case of registration with the 5GS based on the operator policy. UUAA-MM may be performed in a case that the UUAA-MM is requested by the operator and/or in a case that the UE has an aerial UE subscription in Access and Mobility Subscription Data and provides the CAA-Level UAV ID included in the Registration Request message. In a case that UUAA-MM is not performed, the UE may be authenticated and/or authorized by PDU session establishment in UUAA-SM.

UUAA-MM may be optional. UUAA-MM may be performed for the UE requesting authentication and authorization of the UAV by the USS in a case that the UE registers with the 5GS. UUAA-MM may be performed by the AMF. In a case that the UE has an airborne UE subscription in the 5GS and in a case that the UE provides the CAA-Level UAV ID of the UAV included in the registration request message, UUAA-MM may be performed while the UE is registered based on a local network policy. UUAA-MM may be performed in a case that the USS that has authenticated the UAV performs re-authentication.

The UE may also be authenticated and authorized by the USS using the CAA-Level UAV ID and a credential associated with the CAA-Level UAV ID. In a case that UUAA-MM is being performed, the AMF may communicate with the USS via the UAS NF and may transfer authentication messages between the UE and the UAS NF.

Next, each step of UUAA-MM will be described below.

First, the UE performs the registration procedure (S2400).

Then, first communication is performed between the UE and the AMF and the USS (S2402). In the first communication, messages for authentication and authorization used by the USS may be transmitted and/or received between the UE and the AMF and the USS.

Here, the UE and/or the AMF may recognize whether UUAA-MM has succeeded through a message for the first communication. In other words, the UE and/or the AMF may recognize, through the message for the first communication, whether the authentication and authorization of the UAV have been allowed.

Then, the AMF can perform a fifth condition fulfillment determination. The fifth condition fulfillment determination is used by the network (or AMF) to determine whether the UUAA-MM has succeeded. The AMF may initiate the UE configuration update procedure (S2404) of (A) of FIG. 12 in a case that the fifth condition fulfillment determination is true. In a case that the fifth condition fulfillment determination is false, the AMF may initiate a deregistration procedure (S2406) of (B) of FIG. 12.

Note that the fifth condition fulfillment determination may be performed based on reception of the message used in the first communication, and/or the subscriber information, and/or the network capability information, and/or the operator policy, and/or the network status, and/or the user registration information, and/or the context held in the AMF, and/or the like.

For example, in a case that the UUAA-MM succeeds, the fifth condition fulfillment determination may be true, and in a case that the UUAA-MM fails, the fifth condition fulfillment determination may be false. Further, in a case that the transmitted and/or received identification information is allowed, the fifth condition fulfillment determination may be true, whereas in a case that the transmitted and/or received identification information is not allowed, the fifth condition fulfillment determination may be false. Note that conditions for determining whether the fifth condition fulfillment determination is true or false may not be limited to the above-described conditions.

The AMF may indicate the result of the UUAA-MM to the UE by a procedure performed according to whether the fifth condition fulfillment determination is true or false.

Each apparatus may complete the present procedure based on the first communication and/or the UE configuration update procedure and/or the deregistration procedure being performed.

The UE may recognize the result of the UUAA-MM by the procedure of (A) or (B) of FIG. 12. In other words, the UE may recognize the result of the UUAA-MM through the message received in the procedure of (A) or (B) of FIG. 12. The UE may perform the result of the UUAA-MM based on completion of the present procedure.

In a case that the authorization for the C2 communication is performed during the UUAA-MM procedure, the UE may recognize the result of authorization for the C2 communication and/or authorization of the pairing between the UAV and the UAV-C and/or the flight of the UAV.

The UE may be prohibited from transmitting the MM message and/or the SM message while performing the UUAA-MM procedure. In other words, the UE may be controlled not to transmit the MM message and/or the SM message until the first communication and/or the UE configuration update procedure and/or the deregistration procedure is completed.

### 3.2.7.2. UUAA-SM

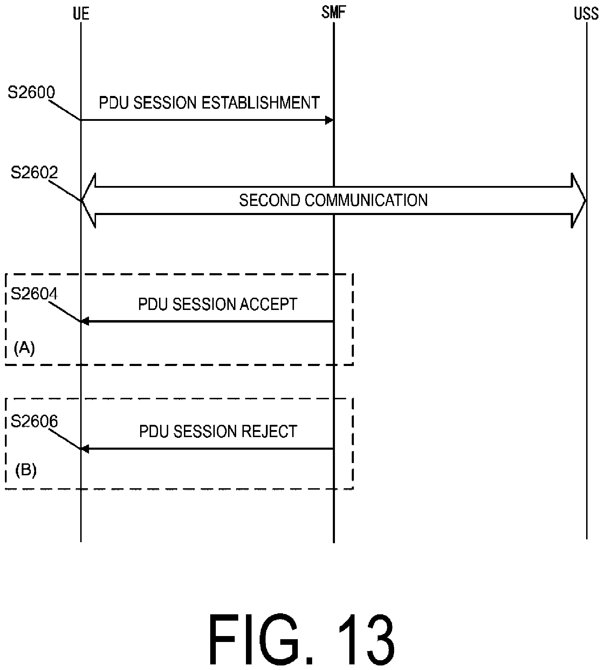

Next, the UUAA-SM procedure will be described by using FIG. 13. The UUAA-SM procedure will be hereinafter also referred to as UUAA-SM or the present procedure. The present procedure may be a procedure performed during PDU session establishment.

Note that the messages transmitted and/or received in the present procedure may have the same behavior as that described in the section of the PDU session establishment procedure.

In a case that the UE requests establishment of a PDU session, the PDU session may request UUAA authentication of the UAV.

In a case that UUAA is revoked, PDU sessions associated with all UAVs may be released. In other words, in a case that authentication and authorization of the UAV are revoked, PDU sessions associated with all UAVs may be released.

UUAA-SM may be performed by the SMF during the PDU session establishment procedure. UUAA-SM may be performed based on SM subscription data obtained from UDM and based on the service level device ID provided by the UE in the PDU session establishment request message.

Next, each step of UUAA-SM will be described below.

First, the UE performs the PDU session establishment procedure. Specifically, the UE transmits the PDU session establishment request message to the SMF (S2600).

Then, second communication is performed between the UE and the SMF and the USS (S2602). In the second communication, messages for authentication and authorization used by the USS may be transmitted and/or received between the UE and the SMF and the USS.

Here, the UE and/or the SMF may recognize whether the UUAA-SM has succeeded through a message for the second communication. In other words, the UE and/or the SMF may recognize, through the message for the second communication, whether authentication and authorization of the UAV have been allowed.

Then, the SMF can perform a sixth condition fulfillment determination. The sixth condition fulfillment determination is used by the network (or SMF) to determine whether the UUAA-SM has succeeded. In a case that the sixth condition fulfillment determination is true, the SMF transmits the PDU session establishment accept message in (A) of FIG. 13 (S2604), whereas in a case that the sixth condition fulfillment determination is false, the SMF transmits the PDU session establishment reject message in (B) of FIG. 13 (S2606).

Note that the sixth condition fulfillment determination may be performed based on reception of the message used in the second communication, and/or the subscriber information, and/or the capability information of the network, and/or the operator policy, and/or the network status, and/or the user registration information, and/or the context held in the AMF, and/or the like.

For example, in a case that the UUAA-SM succeeds, the sixth condition fulfillment determination may be true, whereas in a case that the UUAA-SM fails, the sixth condition fulfillment determination may be false. Further, in a case that the transmitted and/or received identification information is allowed, the sixth condition fulfillment determination may be true, whereas in a case that the transmitted and/or received identification information is not allowed, the sixth condition fulfillment determination may be false. The conditions for determining whether the sixth condition fulfillment determination is true or false need not be limited to the conditions described above.

The SMF may indicate the result of the UUAA-SM to the UE through a message transmitted according to whether the sixth condition fulfillment determination is true or false.

Each apparatus may complete the present procedure based on performance of the second communication, and/or transmission and/or reception of the PDU session accept message, and/or transmission and/or reception of the PDU session reject message.

The UE may recognize the result of the UUAA-SM by receiving the message in (A) or (B) of FIG. 13. The UE may recognize the result of the UUAA-SM based on completion of the present procedure.

Note that in a case that authorization for the C2 communication is performed during the UUAA-SM procedure, the UE may recognize the result of authorization for the C2 communication and/or authorization of the pairing between the UAV and the UAV-C and/or the flight of the UAV.

The UE may be prohibited from transmitting the MM message and/or the SM message while performing the UUAA-SM procedure. In other words, the UE may be controlled not to transmit the MM message and/or the SM message until the second communication and/or the PDU session establishment procedure is completed.

### 3.2.7.3. UUAA Revocation Procedure

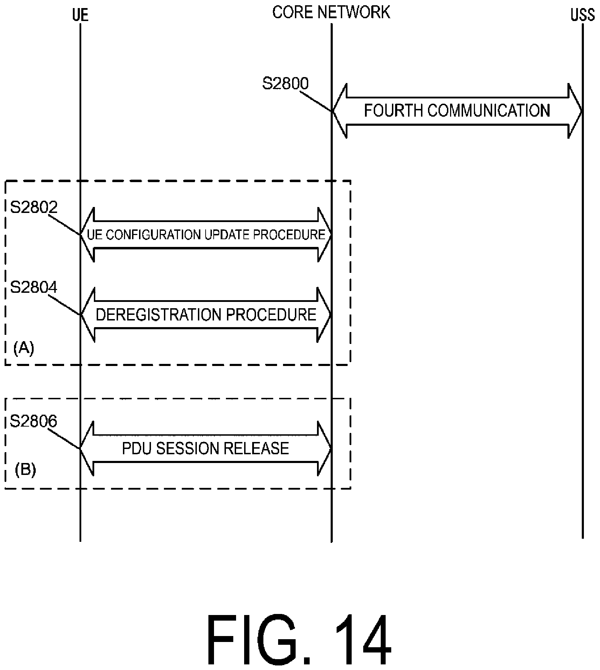

Now, a UUAA Revocation procedure will be described with reference to FIG. 14. Hereinafter, the UUAA revocation procedure is also referred to as a UUAA Revocation, a UAV authorization revocation procedure, or the present procedure. The present procedure may be a procedure performed during a registration procedure and/or PDU session establishment.

The present procedure may be the procedure initiated by the core network or the USS. The present procedure may be a procedure for the network or the USS to revoke the authentication and authorization of the UAV for the UE.

Next, each step of the present procedure will be described below.

First, fourth communication is performed between the core network and the USS (S2800). In the fourth communication, a message for requesting revocation of the UAV may be transmitted and/or received between the core network and the USS.

Then, the core network may initiate a procedure of (A) of FIG. 14 (S2802) (S2804), or may initiate a procedure of (B) of FIG. 14 (S2806).

Note that the core network may determine whether to perform the procedure of (A) of FIG. 14 or the procedure of (B) of FIG. 14 based on reception of the message used in the first communication, and/or the subscriber information, and/or the network capability information, and/or the operator policy, and/or the network status, and/or the user registration information, and/or the context held in the AMF, and/or the like.

For example, in a case that the UUAA-MM has been performed, the procedure of (A) of FIG. 14 may be performed. In a case that the UUAA-SM has been performed, the procedure of (B) of FIG. 14 may be performed. Note that whether to perform (A) or (B) of FIG. 14 may not be limited to be determined based on above-described condition.

The core network may indicate revocation of the authentication and authorization of the UAV to the UE by performing the procedure of (A) or (B) of FIG. 14.

Each apparatus may complete the present procedure based on the fourth communication and/or performance of the procedure of (A) or (B) of FIG. 14.

The UE may recognize the revocation of the authentication and authorization of the UAV based on the completion of the present procedure.

### 4. Embodiments

Next, each embodiment will be described.

### 4.1. First Embodiment

First, a first embodiment will be described. Hereinafter, the first embodiment may be referred to as the present embodiment.

In this embodiment, a PDU session modification procedure or a PDU session release procedure may be implemented.

In this embodiment, the first control message may be a PDU session modification command message or a PDU session release command message.

In the present embodiment, the UAV or the UAV-C may be read as the UE. The UE may be read as the UAV or the UAV-C. Each apparatus may be the UAV and/or the UAV-C and/or the network.

In the present embodiment, the UAV may be interpreted as the UAV-C, and the UAV-C may be interpreted as the UAV.

The present embodiment may be supported in the 5GS and/or the EPS.

The present embodiment may be applied to a state where the UUAA-MM and/or the UUAA-SM have been performed once. The present embodiment may be performed during a UUAA-MM, or UUAA-SM, or a UUAA revocation procedure.

In the present embodiment, the UAV may or may not be in a state in which a PDU session for C2 communication is established with the UAV-C and/or the USS and/or the network.

In the present embodiment, the UAV is in a state in which a communication path for direct C2 communication is established with the UAV-C.

First, the network transmits the first control message to the UAV. The network may transmit, to the UAV, one or more pieces of identification information out of the 10th to 12th and 15th to 18th identification information. Here, the network may include, in the first control message, one or more pieces of identification information out of the 10th to 12th and 15th to 18th identification information.

Here, by including, in the first control message, one or more pieces of identification information out of the 10th to 12th and 15th to 18th identification information, the network may indicate, to the UAV, the content indicated by the identification information included in the first control message. Further, by including, in the first control message, one or more pieces of identification information out of the 10th to 12th and 15th to 18th identification information, the network may allow, for the UAV, the content indicated by the identification information included in the first control message. Further, by transmitting, to the UAV, one or more pieces of identification information out of the 10th to 12th and 15th to 18th identification information, the network may indicate, to the UAV, the content indicated by each piece of identification information.

Specifically, by transmitting the 15th identification information, the network may indicate to the UAV that the authentication and/or authorization for the direct C2 communication is revoked.

By transmitting the 16th identification information, the network may indicate to the UAV that the authentication and/or authorization for the direct C2 communication and/or C2 communication using the PDU session is revoked. The network may transmit, to the UAV, the Service-level-AA container including the 15th identification information and/or the 16th identification information.

By transmitting the 17th identification information, the network may indicate to the UAV a reason causing the authentication and/or authorization for the direct C2 communication and/or C2 communication using the PDU session to be revoked.

By transmitting the 18th identification information, the network may indicate to the UAV a timer value indicating a grace time until the PDU session for the direct C2 communication and/or C2 communication is released.

By transmitting the first control message, the network may indicate to the UAV the content of each piece of the identification information included in the first control message.

By transmitting each piece of the identification information, the network may indicate to the UAV the content of each piece of the identification information.

Note that the network may select and determine whether to include one or more pieces of identification information out of the 10th to 12th and 15th to 18th identification information in the first control message based on a UAV status and/or information received from the USS and/or information received from the UAS-NF, or the like.

The network may determine whether to transmit the first control message and/or each piece of identification information based on the UAV status and/or the information received from the USS and/or the information received from the UAS-NF, or the like. In a case of receiving, from the USS or UAS-NF, the information indicating that the authentication and/or authorization for the direct C2 communication and/or C2 communication using the PDU session is revoked, the network may transmit the first control message and/or each piece of identification information.

Then, the UAV receives the first control message. The UAV may receive, from the network, the first control message including one or more pieces of identification information out of the 10th to 12th and 15th to 18th identification information. The UAV may receive, from the network, one or more pieces of identification information out of the 10th to 12th and 15th to 18th identification information.

Further, the UAV may store the identification information received together with the first control message or recognize the determination of the network based on the reception of the first control message.

Further, in a case of receiving one or more pieces of identification information out of the 10th to 12th and 15th to 18th identification information, the UAV may recognize the content indicated by the received identification information. Further, in the case of receiving one or more pieces of identification information out of the 10th to 12th and 15th to 18th identification information, the UAV may recognize that the content indicated by the identification information included in the first control message has been allowed.

Here, in a case of receiving the 10th identification information, the UAV may initiate an establishment procedure for a direct C2 communication. In other words, in the case of receiving the 10th identification information, the UAV may recognize that a direct C2 communication has been authenticated and/or authorized, and initiate the establishment procedure for the direct C2 communication.

In the case of receiving the 10th identification information, the UAV may not need to initiate an establishment procedure for a direct C2 communication. In other words, in the case of receiving the 10th identification information, the UAV may recognize that a direct C2 communication has not been authenticated and/or authorized and may not need to initiate the establishment procedure for the direct C2 communication.

In a case of receiving the 11th identification information, the UAV may initiate an establishment procedure for a direct C2 communication and/or a PDU session establishment procedure for a C2 communication. In other words, in the case of receiving the 11th identification information, the UAV may recognize that a direct C2 communication and/or a C2 communication using a PDU session have been authenticated and/or authorized, and initiate the establishment procedure for the direct C2 communication and/or the PDU session establishment procedure for the C2 communication.

In the case of receiving the 11th identification information, the UAV may not need to initiate an establishment procedure for a direct C2 communication and/or a PDU session establishment procedure for a C2 communication. In other words, in the case of receiving the 11th identification information, the UAV may recognize that a direct C2 communication and/or a C2 communication using a PDU session have not been authenticated and/or authorized and may not need to initiate the establishment procedure for the direct C2 communication and/or the PDU session establishment procedure for the C2 communication.

In a case of receiving the 12th identification information, the UAV may configure the identification information of the UAV or UAV-C. In the case of receiving the 12th identification information, the UAV may delete the stored identification information of the UAV or UAV-C and store the received identification information of the UAV or UAV-C.

In a case of receiving the 15th identification information, the UAV may recognize that the authentication and/or authorization for the direct C2 communication has been revoked. In a case of receiving the first control message, the UAV may recognize that the authentication and/or authorization for the direct C2 communication has been revoked.

In the case of receiving the 15th identification information, the UAV may initiate a release procedure for a direct C2 communication. In other words, in the case of receiving the 15th identification information, the UAV may recognize that the authentication and/or authorization for the direct C2 communication has been revoked and initiate the release procedure for the direct C2 communication.

In a case of receiving the 16th identification information, the UAV may recognize that authentication and/or authorization for the direct C2 communication and/or C2 communication using the PDU session have been revoked. In the case of receiving the first control message, the UAV may recognize that authentication and/or authorization for the direct C2 communication and/or C2 communication using the PDU session have been revoked.

In the case of receiving the 16th identification information, the UAV may initiate a release procedure for a direct C2 communication and/or a PDU session release procedure for a C2 communication. In other words, in the case of receiving the 16th identification information, the UAV may recognize that authentication and/or authorization for the direct C2 communication and/or C2 communication using the PDU session have been revoked and initiate the release procedure for the direct C2 communication and/or the PDU session release procedure for the C2 communication.

In a case of receiving the 17th identification information, the UAV may recognize a reason causing the authentication and/or authorization for the direct C2 communication and/or C2 communication using the PDU session to be revoked. In the case of receiving the first control message, the UAV may recognize the reason causing the authentication and/or authorization for the direct C2 communication and/or C2 communication using the PDU session to be revoked.

In a case of receiving the 18th identification information, the UAV may recognize a timer value indicating a grace time until the PDU session for the direct C2 communication and/or C2 communication is released. In the case of receiving the 18th identification information, the UAV may start the first timer with the timer value indicated by the 18th identification information. Further, in a case that the first timer expires, the UAV may initiate a release procedure of a communication path for a direct C2 communication. Before the first timer expires, the UAV may initiate a release procedure of a communication path for a direct C2 communication.

Here, the first timer may be a timer for managing a grace time until a PDU session for a direct C2 communication and/or C2 communication is released. The first timer may be a timer for managing a time at which a PDU session for a direct C2 communication and/or C2 communication is released. The first timer may be a timer for managing a timer value indicated by the 18th identification information.

In the case of receiving the first control message, the UAV may recognize that the authentication and/or authorization for the direct C2 communication has been revoked. In the case of receiving the first control message, the UAV may start the first timer with the timer value indicated by the 18th identification information. Further, in the case that the first timer expires, the UAV may initiate a release procedure of a communication path for a direct C2 communication. Before the first timer expires, the UAV may initiate a release procedure of a communication path for a direct C2 communication. In the case of receiving the first control message, the UAV may initiate a release procedure of a communication path for a direct C2 communication. In the case of receiving the first control message, the UAV may initiate a release procedure of a communication path for a direct C2 communication and recognize that the authentication and/or authorization for the direct C2 communication has been revoked.

Note that the behavior of the UAV described above may be performed after receiving the first control message. The behavior of the UAV described above may be performed after receiving one or more pieces of identification information out of the 10th to 12th and 15th to 18th identification information.

In the case of receiving the first control message, the UAV may recognize the content of each piece of the identification information included in the first control message, or perform the behavior for the case of receiving each piece of identification information.

In the case of receiving each piece of identification information, the UAV may recognize the content of each piece of the identification information.

### 4. Modifications

A program running on an apparatus according to an aspect of the present invention may serve as a program that controls a Central Processing Unit (CPU) and the like to cause a computer to function in such a manner as to realize the functions of the embodiment according to the aspect of the present invention. Programs or information handled by the programs are temporarily stored in a volatile memory such as a Random Access Memory (RAM), a nonvolatile memory such as a flash memory, a Hard Disk Drive (HDD), or another storage apparatus system.

Note that a program for realizing such functions of the embodiment according to an aspect of the present invention may be recorded on a computer-readable recording medium. The functions may be realized by causing a computer system to read the program recorded on the recording medium for execution. It is assumed that the "computer system" refers to a computer system built into the apparatuses, and the computer system includes an operating system and hardware components such as a peripheral device. In addition, the "computer-readable recording medium" may be a semiconductor recording medium, an optical recording medium, a magnetic recording medium, a medium dynamically retaining the program for a short time, or any other computer-readable recording medium.

In addition, each functional block or various features of the apparatuses used in the aforementioned embodiments may be implemented or performed on an electric circuit, for example, an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or may be a processor of a known type, a controller, a micro-controller, or a state machine instead. The aforementioned electric circuit may include a digital circuit or may include an analog circuit. In addition, in a case that a circuit integration technology that replaces the present integrated circuits appears with advances in semiconductor technologies, one or multiple aspects of the present invention can also use a new integrated circuit based on the technology.

Note that the invention of the present application is not limited to the above-described embodiments. Although apparatuses have been described as an example in the embodiments, the invention of the present application is not limited to these apparatuses, and is applicable to a terminal apparatus or a communication apparatus of a fixed-type or a non-stationary electronic apparatus installed indoors or outdoors, for example, an AV apparatus, a kitchen apparatus, a cleaning or washing machine, an air-conditioning apparatus, office equipment, a vending machine, and other household apparatuses.

Although, the embodiments of the present invention have been described in detail above referring to the drawings, the specific configuration is not limited to the embodiments and includes, for example, design changes within the scope that do not depart from the gist of the present invention. Furthermore, in the present invention, various modifications are possible within the scope of claims, and embodiments that are made by suitably combining technical means disclosed according to the different embodiments are also included in the technical scope of the present invention. In addition, a configuration in which elements described in the respective embodiments and having mutually similar effects are substituted for one another is also included.

### Cross-Reference of Related Application

The present application claims priority of JP 2022-072932, filed on April 27, 2022, and all the contents thereof are included herein by the reference.

### Reference Signs List

1 Mobile communication system
10 UE_A
30 PGW-U
32 PGW-C
35 SGW
40 MME
45 eNB
50 HSS
60 PCRF
80 Access network_A (E-UTRAN)
90 Core network_A
120 Access network_B (5G AN)
122 gNB
130 UPF
132 SMF
140 AMF
150 UDM
160 PCF
190 Core network_B
235 UPF_A
239 UPF_C

## Claims

1. A User Equipment (UE) comprising:
a transmission and/or reception unit; and
a controller, wherein
the UE has established a communication path with a UAV-C for a first direct C2 communication,
the transmission and/or reception unit receives a PDU session modification command message including first identification information from a network,
the first identification information is information indicating that authentication and/or authorization of the communication path for the first direct C2 communication is revoked, and
the controller, based on reception of the PDU session modification command message,
recognizes that the authentication and/or authorization of the communication path for the first direct C2 communication has been revoked, and
initiates a release procedure of the communication path for the first direct C2 communication.

2. The UE according to claim 1, wherein
the transmission and/or reception unit receives a PDU session modification command message including second identification information from a network,
the second identification information is a timer value indicating a grace time until the communication path for the first direct C2 communication is released, and
the controller, based on reception of the PDU session modification command message,
starts a timer using the timer value, and
in a case that the timer expires, initiates the release procedure of the communication path for the first direct C2 communication.
